(19) **Europäisches Patentamt / European Patent Office / Office européen des brevets**

(11) **EP 4 270 266 A1**

(12) **EUROPEAN PATENT APPLICATION**
published in accordance with Art. 153(4) EPC

(43) Date of publication:
**01.11.2023 Bulletin 2023/44**

(21) Application number: **21913114.1**

(22) Date of filing: **14.08.2021**

(51) International Patent Classification (IPC):
**G06N 20/00** (2019.01)

(52) Cooperative Patent Classification (CPC):
**G06F 8/65; G06N 20/00; H04L 9/00; H04L 63/00**

(86) International application number:
**PCT/CN2021/112644**

(87) International publication number:
**WO 2022/142366 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2020 CN 202011635759**

(71) Applicant: **Huawei Technologies Co., Ltd.**
**Shenzhen, Guangdong 518129 (CN)**

(72) Inventors:
• **SHAO, Yunfeng**
  **Shenzhen, Guangdong 518129 (CN)**
• **LI, Bingshuai**
  **Shenzhen, Guangdong 518129 (CN)**
• **WU, Jun**
  **Shenzhen, Guangdong 518129 (CN)**
• **TIAN, Haibo**
  **Guangzhou, Guangdong 510275 (CN)**

(74) Representative: **Pfenning, Meinig & Partner mbB**
**Patent- und Rechtsanwälte**
**Theresienhöhe 11a**
**80339 München (DE)**

(54) **METHOD AND APPARATUS FOR UPDATING MACHINE LEARNING MODEL**

(57) Embodiments of this application provide a machine learning model update method, applied to the field of artificial intelligence. The method includes: A first apparatus generates a first intermediate result based on a first data subset. The first apparatus receives an encrypted second intermediate result sent by a second apparatus, where the second intermediate result is generated based on a second data subset corresponding to the second apparatus. The first apparatus obtains a first gradient of a first model, where the first gradient of the first model is generated based on the first intermediate result and the encrypted second intermediate result. After being decrypted by using a second private key, the first gradient of the first model is for updating the first model, where the second private key is a decryption key generated by the second apparatus for homomorphic encryption. According to the method, in a scenario of vertical federated learning, when the first apparatus performs model update by using data of the second apparatus, data security of the second apparatus can be protected, thereby protecting user privacy.

FIG. 3

## Description

This application claims priority to Chinese Patent Application No. 202011635759.9, entitled "MACHINE LEARNING MODEL UPDATE METHOD AND APPARATUS" and filed with the China National Intellectual Property Administration on December 31, 2020, which is incorporated herein by reference in its entirety.

## TECHNICAL FIELD

This application relates to the field of machine learning technologies, and in particular, to a model and an apparatus.

## BACKGROUND

Federated learning (federated learning) is a distributed machine learning technology. Each federated learning client (federated learning client, FLC), for example, a federated learning apparatus 1, 2, 3, ..., or k, performs model training by using local computing resources and local network service data, and sends model parameter update information $\Delta\omega$, for example, $\Delta\omega_1$, $\Delta\omega_2$, $\Delta\omega_3$, ..., and $\Delta\omega_k$ generated during local training, to a federated learning server (federated learning server, FLS). The federated learning server performs model aggregation by using an aggregation algorithm based on model update parameters, to obtain an aggregated machine learning model. The aggregated machine learning model is used as an initial model for model training performed by the federated learning apparatus next time. The federated learning apparatus and the federated learning server perform the model training for a plurality of times, and stop training until an obtained aggregated machine learning model meets a preset condition.

In the federated learning technology, aggregation and model training need to be sequentially performed on data that is in different entities and that has different features, to enhance a learning capability of the model. A method for performing model training after aggregation on data that is of different entities and that has different features is referred to as vertical federated learning.

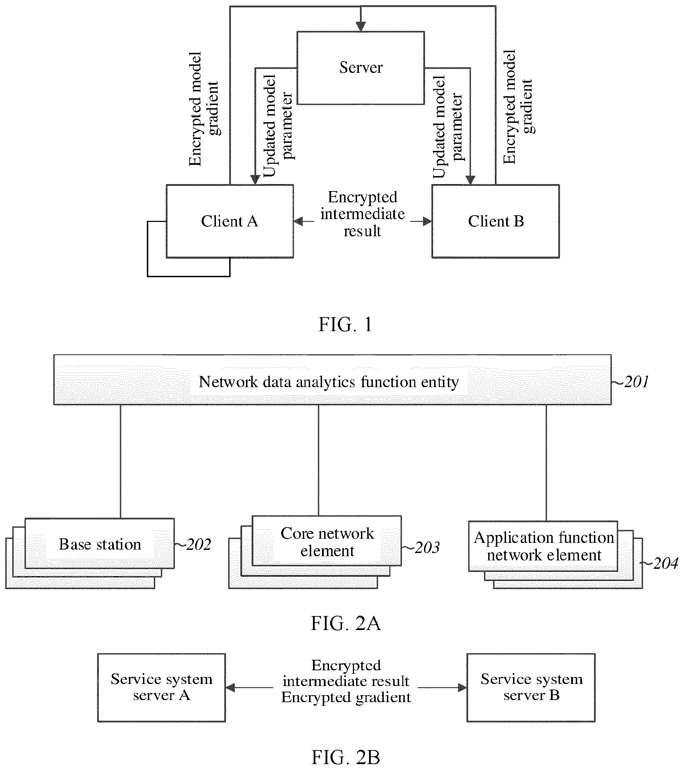

For existing vertical federated learning, refer to FIG. 1. An apparatus B and an apparatus A receive a pair of a public key and a private key of a server, update a model based on a gradient of a model sent by a client A and a client B, and separately send an updated model to the client A and the client B.

The existing vertical federated learning needs to depend on the server. However, since the public key and the private key are generated by the server, whether the server is trusted is an important problem. If the server is an untrusted entity, data security is greatly threatened. How to improve security of vertical federated learning becomes a problem that needs to be resolved.

## SUMMARY

This application provides a machine learning model update method, an apparatus, and a system, to improve security of vertical federated learning.

To achieve the foregoing objectives, the following technical solutions are provided in embodiments of this application:

According to a first aspect, an embodiment of this application provides a machine learning model update method. The method includes: A first apparatus generates a first intermediate result based on a first data subset. The first apparatus receives an encrypted second intermediate result sent by a second apparatus, where the second intermediate result is generated based on a second data subset corresponding to the second apparatus. The first apparatus obtains a first gradient of a first model, where the first gradient of the first model is generated based on the first intermediate result and the encrypted second intermediate result. After being decrypted by using a second private key, the first gradient of the first model is for updating the first model, where the second private key is a decryption key generated by the second apparatus for homomorphic encryption. According to the method, the second apparatus that has the second data subset performs, by using a key (for example, a public key) generated by the second apparatus, homomorphic encryption on the second intermediate result sent to the first apparatus, and the second apparatus decrypts the gradient by using the private key generated by the second apparatus. In this way, in a scenario of vertical federated learning, when the first apparatus performs model update by using data of the second apparatus, data security of the second apparatus can be protected, for example, user data such as age, job, and sex in Table 2 may not be obtained, thereby protecting user privacy.

For example, the first gradient may be determined by the first apparatus, or may be determined by another apparatus based on the first intermediate result and the encrypted second intermediate result.

In a possible design, the second intermediate result is encrypted by using a second public key that is generated by the second apparatus for homomorphic encryption. The first apparatus generates a first public key and a first private key for homomorphic encryption. The first apparatus encrypts the first intermediate result by using the first public key. According to the method, the first apparatus and the second apparatus respectively perform encryption or decryption on data of respective data subsets, so that data security of the respective data subsets can be ensured.

In a possible design, the first apparatus sends the encrypted first intermediate result to the second apparatus, so that the second apparatus can perform model training by using the data of the first apparatus, and security of the data of the first apparatus can be ensured.

In a possible design, that the first gradient of the first model is determined based on the first intermediate result and the encrypted second intermediate result is specifically: The first gradient of the first model is determined based on the encrypted first intermediate result and the encrypted second intermediate result. The first apparatus decrypts the first gradient of the first model by using the first private key. According to the method, when the first apparatus performs training on data that needs to be encrypted, security of training data is ensured.

In a possible design, the first apparatus generates first noise of the first gradient of the first model; the first apparatus sends the first gradient including the first noise to the second apparatus; and the first apparatus receives a first gradient decrypted by using the second private key, where the decrypted gradient includes the first noise. According to the method, noise is added to the first gradient. When the first gradient is sent to the second apparatus for decryption, data security of the first data subset of the first apparatus can still be ensured.

In a possible design, the first apparatus receives a second parameter that is of a second model and that is sent by the second apparatus. The first apparatus determines a second gradient of the second model based on the encrypted first intermediate result, the encrypted second intermediate result, and a second parameter set of the second model. The first apparatus sends the second gradient of the second model to the second apparatus. According to the method, the first apparatus determines the second gradient of the second model based on the second data subset of the second apparatus and the first data subset of the first apparatus. Since an encrypted intermediate result of the second data subset is used, data security of the second data subset is ensured.

In a possible design, the first apparatus determines second noise of the second gradient. The second gradient sent to the second apparatus includes the second noise. According to the method, in a scenario in which the first apparatus updates the second model of the second apparatus, the first apparatus adds the second noise to the second gradient, so that security of the first data subset of the first apparatus can be ensured.

In a possible design, the first apparatus receives an updated second parameter including the second noise, where the second parameter set is a parameter set for updating the second model by using the second gradient; and the first apparatus removes the second noise included in the updated second parameter. According to the method, in a scenario in which the first apparatus updates the second model of the second apparatus, the first apparatus performs noise cancellation on the second parameter, so that security of the first data subset can be ensured when the first apparatus updates the second model.

In a possible design, the first apparatus receives at least two second public keys for homomorphic encryption, where the at least two second public keys are generated by at least two second apparatuses. The first apparatus generates, based on the received at least two second public keys and the first public key, an aggregated public key for homomorphic encryption, where the aggregated public key is for encrypting the second intermediate result and/or the first intermediate result. According to the method, when data of a plurality of apparatuses participates in updating of a machine learning model, security of the data of each apparatus can be ensured.

In a possible design, that the first gradient of the first model is decrypted by using a second private key includes: The first apparatus sequentially sends the first gradient of the first model to the at least two second apparatuses, and receives first gradients of the first model that are obtained after the at least two second apparatuses separately decrypt the first model by using corresponding second private keys. According to the method, when data of a plurality of apparatuses participates in updating of a machine learning model, security of the data of each apparatus can be ensured.

In a possible design, the first apparatus decrypts the first gradient of the first model by using the first private key.

According to a second aspect, an embodiment of this application provides a machine learning model update method. The method includes: A first apparatus sends an encrypted first data subset and an encrypted first parameter of a first model, where the encrypted first data subset and the encrypted first parameter are for determining an encrypted first intermediate result. The first apparatus receives an encrypted first gradient of the first model, where the first gradient of the first model is determined based on the encrypted first intermediate result, the encrypted first parameter, and an encrypted second intermediate result. The first apparatus decrypts the encrypted first gradient by using a first private key, where the decrypted first gradient of the first model is for updating the first model. According to the method, the first apparatus performs calculation on the first gradient used for the first model update in another apparatus, and the first apparatus encrypts the first data subset and sends the encrypted first data subset, so that data security of the first data subset can be ensured.

In a possible design, the first apparatus receives an encrypted second gradient of a second model, where the encrypted second gradient is determined according to the encrypted first intermediate result and the encrypted second intermediate result, the second intermediate result is determined based on a second data subset of a second apparatus and a parameter of the second model of the second apparatus, and the encrypted second intermediate result is obtained by the second apparatus by performing homomorphic encryption on the second intermediate result. The first apparatus decrypts the second gradient by using the first private key. The first apparatus sends, to the second apparatus, the second gradient obtained by decrypting by using the first private key, where the decrypted second gradient is for updating the second model. According to the method, the first apparatus decrypts the gradient of the model of the second apparatus, to ensure data security of the first data subset of the first apparatus.

In a possible design, the first gradient received by the first apparatus includes first noise, the decrypted first gradient includes the first noise, and the updated parameter of the first model includes the first noise. Noise is included in the gradient, which can further ensure data security.

In a possible design, the first apparatus updates the first model based on the decrypted first gradient. Alternatively, the first apparatus sends the decrypted first gradient.

In a possible design, the first apparatus receives at least two second public keys for homomorphic encryption, where the at least two second public keys are generated by at least two second apparatuses. The first apparatus generates, based on the received at least two second public keys and the first public key, an aggregated public key for homomorphic encryption, where the aggregated public key is for encrypting the second intermediate result and/or the first intermediate result.

According to a third aspect, an embodiment of this application provides a machine learning model update method. The method includes: An encrypted first intermediate result and an encrypted second intermediate result are received.

A parameter of the first model is received. A first gradient of the first model is determined based on the encrypted first intermediate result, the encrypted second intermediate result, and the parameter of the first model. The first gradient is decrypted. The first model is updated based on the decrypted first gradient. According to the method, both the first intermediate result and the second intermediate result are encrypted, so that data security of each data subset is ensured.

In a possible design, the encrypted first intermediate result is obtained by performing homomorphic encryption on the first intermediate result by using a first public key; and the encrypted second intermediate result is obtained by performing homomorphic encryption on the second intermediate result by using the first public key.

In a possible design, that the first gradient is decrypted includes: The first gradient is decrypted by using the first private key.

In a possible design, the first gradient is sent to the first apparatus.

In a possible design, the first public key is obtained from the first apparatus, and the first public key is sent to the second apparatus.

According to a fourth aspect, this application provides an apparatus. The apparatus is configured to perform any method provided in the first aspect to the third aspect.

In a possible design manner, in this application, the machine learning model management apparatus may be divided into functional modules according to any method provided in the first aspect. For example, each functional module may be obtained through division based on a corresponding function, or two or more functions may be integrated into one processing module.

For example, in this application, the machine learning model management apparatus may be divided into a receiving module, a processing module, a sending module, and the like based on functions. For descriptions of possible technical solutions and beneficial effects performed by the functional modules obtained through division, refer to the technical solutions provided in the first aspect or the corresponding possible designs of the first aspect, the technical solutions provided in the second aspect or the corresponding possible designs of the second aspect, or the technical solutions provided in the third aspect or the corresponding possible designs of the third aspect. Details are not described herein again.

In another possible design, the machine learning model management apparatus includes a memory and a processor, where the memory is coupled to the processor. The memory is configured to store computer instructions, and the processor is configured to invoke the computer instructions to perform the method provided in the first aspect or the corresponding possible design of the first aspect, the method provided in the second aspect or the corresponding possible design of the second aspect, or the method provided in the third aspect or the corresponding possible design of the third aspect.

According to a fifth aspect, this application provides a computer-readable storage medium, for example, a non-transitory computer-readable storage medium. The computer device stores a computer program (or instructions). When the computer program (or the instruction) runs on a computer device, the computer device is enabled to perform the method provided in the first aspect or the corresponding possible designs of the first aspect, the method provided in the second aspect or the corresponding possible designs of the second aspect, or the method provided in the third aspect or the corresponding possible designs of the third aspect.

According to a sixth aspect, this application provides a computer program product. When the computer program product is run on a computer device, the method provided in the first aspect or the corresponding possible designs of the first aspect, the method provided in the second aspect or the corresponding possible designs of the second aspect, or the method provided in the third aspect or the corresponding possible designs of the third aspect is performed.

According to a seventh aspect, this application provides a chip system, including a processor, where the processor is configured to: invoke, from a memory, a computer program stored in the memory and run the computer program, to perform the method provided in the first aspect or the corresponding possible designs of the first aspect, the method provided in the second aspect or the corresponding possible designs of the second aspect, or the method provided in the third aspect or the corresponding possible designs of the third aspect.

It may be understood that, in the another possible design of the first aspect, the another possible design of the second aspect, or any technical solution provided in the second to seventh aspects, the sending action in the first aspect, the second aspect, or the third aspect may be specifically replaced with sending under control of a processor, and the receiving action in the second aspect or the first aspect may be specifically replaced with receiving under control of a processor.

It may be understood that any system, apparatus, computer storage medium, computer program product, chip system, or the like provided above may be applied to the corresponding method provided in the first aspect, the second aspect, or the third aspect. Therefore, for beneficial effects that can be achieved by the method, refer to beneficial effects in the corresponding method. Details are not described herein again.

In this application, a name of any apparatus above does not constitute any limitation on the devices or functional modules. During actual implementation, these devices or functional modules may have other names. Each device or functional module falls within the scope defined by the claims and their equivalent technologies in this application, provided that a function of the device or functional module is similar to that described in this application.

These aspects or other aspects in this application are more concise and comprehensible in the following descriptions.

**BRIEF DESCRIPTION OF DRAWINGS**

FIG. 1 is a schematic diagram of an existing structure applicable to a vertical federated learning system;

FIG. 2A is a schematic diagram of a structure applicable to a vertical federated learning system according to an embodiment of this application;

FIG. 2B is a schematic diagram of a structure applicable to a vertical federated learning system according to an embodiment of this application;

FIG. 3 is a flowchart of a method applicable to vertical federated learning according to an embodiment of this application;

FIG. 4 is a flowchart of a method applicable to vertical federated learning according to an embodiment of this application;

FIG. 5A and FIG. 5B are a flowchart of another method applicable to vertical federated learning according to an embodiment of this application;

FIG. 6A and FIG. 6B are a flowchart of another method applicable to vertical federated learning according to an embodiment of this application;

FIG. 7 is a flowchart of another method applicable to vertical federated learning according to an embodiment of this application;

FIG. 8 is a schematic diagram of a structure of a machine learning model update apparatus according to an embodiment of this application; and

FIG. 9 is a schematic diagram of a hardware structure of a computer device according to an embodiment of this application.

**DESCRIPTION OF EMBODIMENTS**

The following describes some terms and technologies in embodiments of this application.

(1) Machine learning, machine learning model, and machine learning model file

The machine learning means to parse data by using an algorithm, learning from the data, and making a decision and prediction on an event in the real world. The machine learning is performing "training" by using a large amount of data, and learning, from the data by using various algorithms, how to complete a model service.

In some examples, the machine learning model is a file that includes algorithm implementation code and parameters for completing a model service. The algorithm implementation code is used to describe a model structure of the machine learning model, and the parameters are used to describe an attribute of each component of the machine learning model. For ease of description, the file is referred to as the machine learning model file below. For example, sending a machine learning model in the following specifically means to send a machine learning model file.

In some other examples, the machine learning model is a logical functional module for completing a model service. For example, a value of an input parameter is input into the machine learning model, to obtain a value of an output parameter of the machine learning model.

The machine learning model includes an artificial intelligence (artificial intelligence, AI) model, for example, a neural network model.

(2) Vertical federated learning

Vertical federated learning (Vertical federated learning is also referred to as heterogenous federated learning) is a technology that performs federated learning when each party has different feature spaces. Vertical federated learning can train data that uses a same user, has different user features, and is in different physical apparatuses. Vertical federated learning can aggregate data that is in different entities, has different features or attributes, to enhance federated learning of a model capability. A feature of the data may also be an attribute of the data.

(3) Model gradient

The model gradient is a change amount of a model parameter in a training process of a machine learning model.

(4) Homomorphic encryption

Homomorphic encryption (homomorphic encryption) is a form of encryption, which allows uses to perform an algebraic operation in a specific form on ciphertext to still obtain an encrypted result. The key in a homomorphic key pair is used to decrypt the operation result of the homomorphic encrypted data. The operation result is the same as that of the plaintext.

(5) Public key

The public key is a key for homomorphic encryption.

(6) Private key

The private key is a key for decryption during homomorphic encryption.

Other terms

In addition, in embodiments of this application, the term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Specifically, use of the term "example", "for example", or the like is intended to present a related concept in a specific manner.

In embodiments of this application, the terms "second" and "first" are used merely for the purpose of description, and shall not be construed as indicating or implying relative importance or implying a quantity of indicated technical features. Therefore, feature defined by "second" and "first" may explicitly or implicitly include one or more of the features. In the descriptions of this application, unless otherwise stated, "a plurality of" means two or more than two.

The term "at least one" in this application means one or more, and the term "a plurality of" in this application means two or more. For example, "a plurality of first packets" means two or more first packets.

It is to be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It is to be further understood that, the term "and/or" used in this specification indicates and includes any or all possible combinations of one or more items in associated listed items. The term "and/or" describes an association relationship between associated objects and represents that three relationships may exist. For example, A and/or B may represent the following three cases: Only A exists, both A and B exist, and only B exists. In addition, the character "/" in this application generally indicates an "or" relationship between the associated objects.

It is to be further understood that sequence numbers of processes do not mean execution sequences in embodiments of this application. The execution sequences of the processes should be determined based on functions and internal logic of the processes, and should not be construed as any limitation on the implementation processes of embodiments of this application.

It is to be understood that determining B based on A does not mean that B is determined based on only A, and B may alternatively be determined based on A and/or other information.

It is to be further understood that the term "include" (or referred to as "includes", "including", "comprises", and/or "comprising"), when being used in this specification, specifies the presence of stated features, integers, steps, operations, elements, and/or components, but do not preclude the presence or addition of one or more other features, integers, steps, operations, elements, components, and/or groups thereof.

It is to be further understood that the term "if" may be interpreted as a meaning "when" ("when" or "upon"), "in response to determining", or "in response to detecting".

It is to be understood that "one embodiment", "an embodiment", and "a possible implementation" mentioned in the entire specification mean that particular features, structures, or characteristics related to an embodiment or the implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments by using any appropriate manner.

It is to be further understood that a "connection" in embodiments of this application may be a direct connection, an indirect connection, a wired connection, or a wireless connection. In other words, a manner of a connection between devices is not limited in embodiments of this application.

With reference to the accompanying drawings, the following describes the technical solutions provided in embodiments of this application.

FIG. 2A is a schematic diagram of a structure of a system applied to an application scenario of vertical federated learning according to an embodiment of this application. A system 200 shown in FIG. 2A may include a network data analytics function entity 201, a base station 202, a core network element 203, and an application function entity 204. Each network entity in FIG. 2A may be an apparatus A or an apparatus B in embodiments of this application.

The network data analytics function (Network Data Analytics Function, NWDAF) entity 201 may obtain data from each network entity, for example, the base station 202, the core network element 203, and/or the application function entity 204, to perform data analysis. Data analysis means to train a model based on the obtained data as an input of model training. In addition, the network data analytics function entity 201 may further determine a data analysis result through reasoning based on a model. Then, the data analysis result is provided for another network entity, a third-party service server, a terminal device, or a network management system. This application mainly relates to a data collection function and a model training function of the NWDAF entity 201.

The application function (Application Function, AF) entity 204 is configured to provide a service, or route application-related data, for example, provide the data to the NWDAF entity 201 for model training. Further, the application function entity 204 may further perform vertical federated learning with another network entity by using private data that is not sent to the NWDAF entity 201.

The base station 202 provides an access service for the terminal, to complete forwarding of a control signal and user data between a terminal and a core network. In this embodiment of this application, the base station 202 may further send the data to the NWDAF entity 201 for the NWDAF entity 201 to perform model training. The base station 202 may further perform vertical federated learning with the another network entity by using the private data that is not sent to the NWDAF entity 201.

The core network element 203 provides a core network-related service for the terminal. The core network element 203 may be a user plane function entity applied to a 5G architecture, for example, a UPF entity, a session management function SMF entity, or a policy control function entity, for example, a PCF entity. It is to be understood that the core network element may be further applied to another future network architecture, for example, a 6G architecture. In this embodiment of this application, any core network element may further send data to the NWDAF entity 201 for the NWDAF entity 201 to perform model training. The core network element 203 may further perform vertical federated learning with the another network entity by using the private data that is not sent to the NWDAF entity 201.

In addition, the architecture in this embodiment of this application may further include another network element. This is not limited in this embodiment of this application.

When a network architecture in FIG. 2A is used, any network entity may send data that is not related to privacy to the NWDAF entity 201. The NWDAF entity 201 forms a data subset based on data sent by one or more devices, and performs vertical federated learning by combining the data subset and private data that is not sent by another network entity to the NWDF. The NWDAF entity 201 may perform vertical federated learning together with network entities of one type, or may perform vertical federated learning together with network entities of a plurality of types. For example, the NWDAF entity 201 may perform vertical federated learning together with one or more base stations 202 based on network data sent by a plurality of base stations 202. Alternatively, the NWDAF entity 201 may perform vertical federated learning together with the base station 202 and the AF entity 204 based on data sent by the base station 202 and the AF entity 204.

Table 1 is an example of a data set that performs vertical federated learning by using the network architecture in FIG. 2A.

**Table 1**

| Row number | Data | Data source | Description |
|---|---|---|---|
| 1 | Service Experience | AF | Service experience of service flow |
| 2 | Buffer size | AF | Buffer size of application layer corresponding to service flow |
| 3 | [Private data type] | AF | AF internal private data |
| 4 | QoS flow Bit Rate | UPF | Flow rate |
| 5 | QoS flow Packet Delay | UPF | Flow delay |
| 6 | QoS flow Packet Error Rate | UPF | Flow packet error rate |
| 7 | [Private data type] | UPF | UPF internal private data |
| 8 | Reference Signal Received Power | RAN | Radio signal quality RSRP |
| 9 | Reference Signal Received Quality | RAN | Radio signal quality RSRQ |
| 10 | Signal to Interference plus Noise Ratio | RAN | Radio signal quality SINR |
| 12 | [Private data type] | RAN | RAN internal private data |

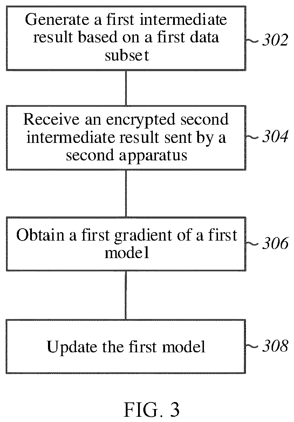

A third row, a seventh row, and a twelfth row respectively represent private data that is not sent to the NWDAF entity 201 and that is stored in the base station 202, the core network element 203, or the AF entity 204, and may be used as data subsets in FIG. 3 to FIG. 7. A column of the data in Table 1 represents features that are of data and that correspond to parameters of a model on which vertical federated learning is performed. For example, content in a first row and a second row, a fourth row to a sixth row, and an eighth row to a tenth row corresponds to parameters of a model trained or used by the NWDAF entity 201. A column of the source in Table 1 separately represents a source of data of each feature. For example, data corresponding to the first row and the second row is sent by the AF entity 204 to the NWDAF entity 201, and data corresponding to the fourth row to the sixth row is sent by the UPF entity to the NWDAF entity 201. The data in the first row (that is, service experience) is used as label data for model training, that is, user's service experience is used as the label data. Data in the first row to the twelfth row is data of a same user in a plurality of entities.

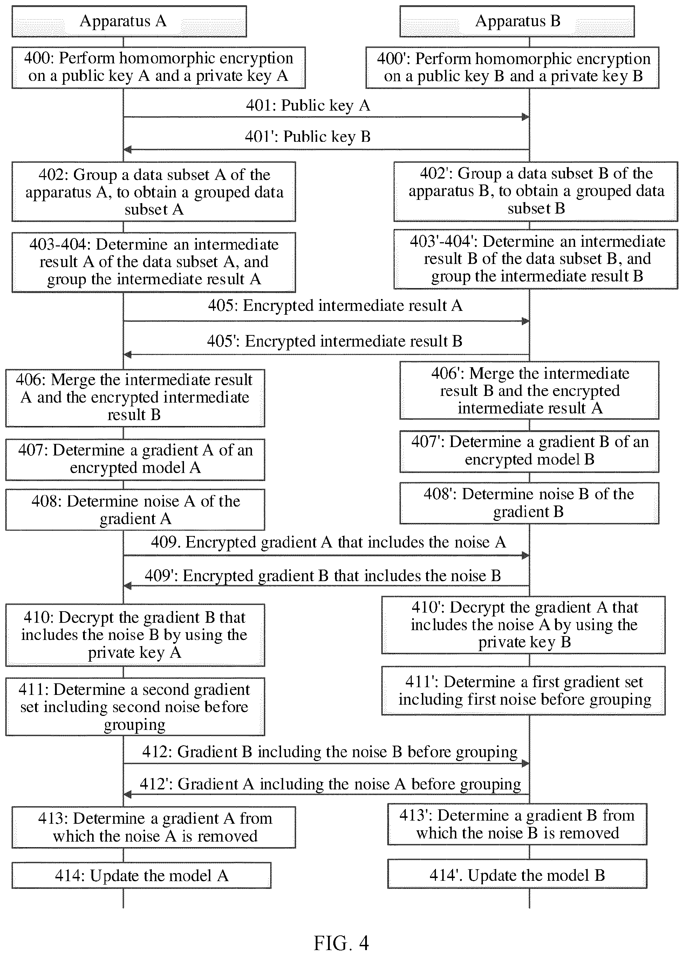

Therefore, in a scenario corresponding to FIG. 2A, the NWDAF entity 201 is used as an apparatus B in FIG. 4 to FIG. 7, and a corresponding data subset includes a label.

FIG. 2B is a schematic diagram of a structure of a system applied to an application scenario of vertical federated learning according to an embodiment of this application. The system shown in FIG. 2B may include a service system server A 251 and a service system server B 252. The service system servers A and B may be servers applied to different service systems, for example, a server of a banking business system and a server of a call service system. The service system server A 251 in FIG. 2B may alternatively be the base station, the core network element 203, the application function network element 204, or the network data analytics function entity 201 in FIG. 2A. The service system server shown in FIG. 2B is configured to store user data, and perform vertical federated learning together with another service system by using the stored user data and user data stored in another service system server. The service system server B 252 in FIG. 2B may alternatively be the base station, the core network element 203, the application function network element 204, or the network data analytics function entity 201 in FIG. 2A.

Table 2 is a schematic diagram of data features by using an example in which the service system server A is a server of a call service system and the service system server B is a server of a banking business system.

| Row number | Data | Data source | Description |
|---|---|---|---|
| 1 | status | Banking business system | Whether to be in default |
| 2 | age | Banking business system | Age |
| 3 | job | Banking business system | Job |
| 4 | Sex | Banking business system | Sex |
| 5 | operation | Banking business system | Number of times of payment collection from other banks |
| 6 | balance | Banking business system | Saving account balance |
| 7 | amount | Banking business system | Consumption amount |
| 8 | Order_num | Banking business system | Number of transactions |
| 9 | days | Banking business system | Number of days from current date to repayment date |
| 10 | arrears | Carrier service system | Whether to be in arrears or out of service |
| 11 | CALL NUMS | Carrier service system | Number of calls |
| 12 | Communication flows | Carrier service system | Traffic consumption |
| 13 | Call nums vs last month | Carrier service system | Change ratio of number of calls to number of calls in last month |
| 14 | Communication_flows vs last month | Carrier service system | Change ratio of traffic consumption to traffic consumption in last month |

Data (that is, status) in Row 1 is used as label data for model training. Data corresponding to the first row to the ninth row is data obtained by a server of the banking business system and may be used as a data subset B corresponding to the apparatus B. Data corresponding to the tenth row to the fourteenth row is data obtained by the carrier service system and may be used as a data subset A corresponding to the apparatus A. The data in the first row to the fourteenth row is data of a same user in different systems.

This is applicable to two application scenarios in FIG. 2A or FIG. 2B. The apparatus A has a data subset A ($D^A$), and the apparatus B has a data subset B ($D^B$). The data subset A and the data subset B each include P pieces of data (for example, data of P users). The data subset A includes N features, and data subset B includes M features. Therefore, the apparatus A has a feature $F_A$, where $F_A = \{f_1, f_2, ... , f_N\}$; and the apparatus B has a feature ($F_B$), where $F_B = \{f_{N+1}, f_{N+2}, ..., f_{N+M}\}$. $f_N$ represents an $N^{th}$ feature, and $f_{N+M}$ represents an $(N+M)^{th}$ feature.

The data subset A ($D^A$) including a feature A and the data subset B ($D^B$) including a feature B are merged into a data set D for vertical federated learning. The data set D includes P pieces of data which is represented as $D = [d_1, d_2, d_3, ..., d_P]^T$. $d_p$ represents a $p^{th}$ piece of data (where $d_p$ is any piece of data in D, and p is any positive integer less than or equal to P). $d_p$ has N+M features which is represented as follows:

$$d_p = \left[ d_p^{f_1}, d_p^{f_2}, ..., d_p^{f_N}, d_p^{f_{N+1}}, ..., d_p^{f_{N+M}} \right]$$

$d_p^{f_N}$ is an $N^{th}$ feature of a $p^{th}$ piece of data, and $d_p^{f_{N+M}}$ is an $(N+M)^{th}$ feature of the $p^{th}$ piece of data. Each piece of

data may be divided into two parts based on the feature $F_A$ and the feature $F_B$, namely,

$$d_p = \left[d_p^{f_1}, d_p^{f_2}, ..., d_p^{f_N}, d_p^{f_{N+1}}, ..., d_p^{f_{N+M}}\right] = \left[d_p^A, d_p^B\right]$$ $d_p^A$ is a feature value corresponding to a feature A

($F^A$) of the p$^{th}$ piece of data, that is, $$d_p^A = \left[d_p^{f_1}, d_p^{f_2}, ..., d_p^{f_N}\right]$$ $d_p^B$ is a feature value corresponding to a feature

$F^B$, that is, $$d_p^B = \left[d_p^{f_{N+1}}, d_p^{f_{N+2}}, ..., d_p^{f_{N+M}}\right]$$ . The data set D may be divided, based on the feature $F^A$ and the feature $F^B$, into two data subsets, namely, a data subset $D^A$ and a data subset $D^B$, which is represented as follows:

$$D = [d_1, d_2, d_3, ..., d_P]^T = \begin{bmatrix} d_1^A & d_1^B \\ \vdots & \vdots \\ d_p^A & d_p^B \end{bmatrix} = [D^A, D^B]$$

The data subset $D^A$ is P pieces of user data having the feature $F_A$ that are owned by the apparatus A, where

$$D^A = [d_1^A, d_2^A, ..., d_P^A]^T$$ . The data subset $D_B$ is P pieces of user data having the feature $F_B$ that are owed by the apparatus B, where $$D^B = [d_1^B, d_2^B, ..., d_P^B]^T$$ .

Parameters of a model A $W^A$ are initialized by the apparatus A and are represented as

$$W^A = [w_1^A, w_2^A, ..., w_N^A].$$

Parameters of a model B $W^B$ are initialized by the apparatus B and are represented as

$$W^B = [w_1^B, w_2^B, ..., w_M^B].$$

From a model dimension, the apparatus B and the apparatus A respectively correspond to models having different parameters. Parameters of a model are in a one-to-one correspondence with features of a data subset. For example, if the data subset $D^A$ of the apparatus A has N features, a model of the apparatus A has N parameters. The model in embodiments of this application is a model that can be iteratively solved by using gradient information. The gradient information is an updated value of the model. The model in embodiments of this application is a linear model or a neural network model. Using a simple linear regression model (without considering vertical federation) as an example, model f(x)=w1*x1+w2*x2+....+wn*xn=y, where y is an output parameter of the model and is also referred to as a label of the model, w1 to wn are N parameters of the model, and x1 to xn are the first feature to an n$^{th}$ feature of one piece of data. However, in a scenario of vertical federation, different features (values) of a same user are respectively located in two or more apparatuses (it is assumed that there are two apparatuses in embodiments of this application). There are two parts of parameters, namely, the parameter $$W^A = [w_1^A, w_2^A, ..., w_N^A]$$ of the model $W^A$ and the parameter

$$W^B = [w_1^B, w_2^B, ..., w_M^B]$$ of the model $W^B$. In this embodiment of this application, it is assumed that one parameter of the model corresponds to one feature in the data subset.

FIG. 3 shows a machine learning model update method in a scenario of vertical federated learning according to an embodiment of this application. The method is applicable to two application scenarios in FIG. 2A and FIG. 2B. The method includes the following steps. Embodiments of this application are shown in the following figures and includes the following steps.

Step 302: A first apparatus generates a first intermediate result based on a first data subset.

The first intermediate result is generated based on a model (that is, a first model) of the first apparatus and the first data subset. The first intermediate result is used to generate a gradient of the first model with an intermediate result generated by another apparatus participating in vertical federated learning (for example, a second intermediate result generated by a second apparatus based on a second model and a second data subset). The gradient of the first model may be referred to as a first gradient.

In an embodiment corresponding to FIG. 3, the first apparatus may be an apparatus A in FIG. 4 to FIG. 7, or may be an apparatus B in FIG. 4 to FIG. 7. This is not limited in this embodiment of this application.

Step 304: The first apparatus receives an encrypted second intermediate result sent by a second apparatus.

The second intermediate result is generated by the second apparatus based on a second model and a second data subset. The second apparatus performs homomorphic encryption on the second intermediate result by using a public key of the second apparatus or an aggregated public key generated by using a public key of the second apparatus and a public key of another apparatus.

In this embodiment of this application, the second apparatus may be an apparatus, or may be a plurality of apparatuses. This is not limited in this embodiment of this application.

Step 306: The first apparatus obtains a first gradient of the first model.

Optionally, the first apparatus may generate the first gradient based on the first intermediate result and the second intermediate result. Alternatively, the first apparatus may obtain, from another apparatus such as the second apparatus, the first gradient generated based on the first intermediate result and the second intermediate result. The second intermediate result for generating the first gradient is an encrypted intermediate result. Optionally, both the second intermediate result and the first intermediate result for generating the first gradient are encrypted intermediate results. The gradient is an update vector of a model parameter.

Step 308: The first apparatus updates the first model based on the first gradient.

In this embodiment of this application, since the second intermediate result for generating the first gradient is an encrypted intermediate result, the first apparatus cannot deduce original data of the second data subset for generating the second intermediate result by obtaining the second intermediate result. Therefore, data security in the scenario of vertical federated learning can be ensured.

Steps 400 and 401: The apparatus A generates a public key A ($pk^A$) and a private key A ($sk^A$) for homomorphic encryption, and sends the public key A to the apparatus B.

Step 402: The apparatus A groups the data subset A ($D_A$) to obtain a grouped data subset A ($DD_A$).

$$D^A = \begin{bmatrix} D_1^{f_1} & \cdots & D_1^{f_N} \\ \vdots & \vdots & \vdots \\ D_P^{f_1} & \cdots & D_P^{f_N} \end{bmatrix}$$

$D^A$ is a data subset A owned by the apparatus A, and may be considered as an original two-dimensional matrix, where each row of data corresponds to one user, and each column corresponds to one feature. Specifically, content in an $i^{th}$ row and a $j^{th}$ column represents a $j^{th}$ feature of an $i^{th}$ piece of data. The data in Table 1 is used as an example. The data subset A is a base station, and the core network element or the AF does not have private data sent to the NWDAF entity. The data in Table 2 is used as an example. The data subset A may be data of the carrier service system. Arrears, CALL NUMS, Communication flows, and the like are used as the feature A of the data subset A.

$$DD^A = \begin{bmatrix} DD_1^{f_1} & \cdots & DD_1^{f_N} \\ \vdots & DD_q^{f_n} & \vdots \\ DD_Q^{f_1} & \cdots & DD_Q^{f_N} \end{bmatrix}$$

$DD^A$ represents a result of grouping (packaging) the data subset A. All data values in a two-dimensional matrix of a grouped data subset A are divided into a plurality of blocks, and each block represents a value of a same feature of a plurality of pieces of data (which is also a plurality of rows of data in $D^A$, for example, L pieces of data), that is, one block is a column vector of data in an $L^{th}$ row and a first column. For example, $DD_1^{f_1}$ is the first feature of a first piece to an $L^{th}$ piece of data of the apparatus A, which is represented as $DD_1^{f_1} = [d_1^{f_1}, d_2^{f_1}, ..., d_L^{f_1}]^T$. $DD_q^{f_n}$ is an $n^{th}$ feature of a $(q*(L - 1)+1)^{th}$ to a $(Q*L)^{th}$ piece of data of the apparatus A, which is represented as $DD_q^{f_n} = [d_{(q-1)*L+1}^{f_n}, d_{(q-1)*L+2}^{f_n}, ..., d_{q*L}^{f_n}]$.

Since a data amount is P, and a size of each block is L, P may not be exactly divided by L (that is, P pieces of data cannot be divided into Q blocks based on L), and a last block may have less than L values. However, values need to be padded for the last block to obtain L values. Therefore, a 0-padding operation is performed on insufficient data, that is, $DD_Q^{fn} = [d_{(Q-1)*L+1}^{fn}, ..., d_P^{fn}, 0,0,..0]$ .

Q is a quantity of groups $Q = \lceil \frac{P}{L} \rceil$ , where L = polynomial order. A value of L may be set based on a requirement. This is not limited in this embodiment of this application.

Steps 400' and 401': The apparatus B generates a public key B (*pk^B*) and a private key B (*sk^B*) for homomorphic encryption, and sends the public key *pk^B* to the apparatus A. In a homomorphic encryption algorithm, the public key is for encryption, and the private key is for decryption.

Step 402': The apparatus B groups the data subset B to obtain a grouped data subset B (DD^B).

$$DD^B = \begin{bmatrix} DD_1^{fN+1} & \cdots & DD_1^{fN+M} \\ \vdots & DD_q^{fN+m} & \vdots \\ DD_Q^{fN+1} & \cdots & DD_Q^{fN+M} \end{bmatrix}$$

$DD_1^{fN+1}$ is a first feature of a first piece of data in the data subset B, and corresponds to an (N+1)th feature of the data set D. The data set D includes the data subset A (D_A) and the data subset B (D^B). The data subset A and the data subset B correspond to a same user, and the data subset A and the data subset B have different features. $DD_1^{fN+1}$

is represented as $DD_1^{fN+1} = [d_1^{fN+1}, d_2^{fN+1}, ..., d_L^{fN+1}]^T$ . $d_L^{fN+1}$ is an (N+1)th feature of an Lth piece of data.

$DD_q^{fN+m}$ is an mth feature of a (q*(L - 1)+1)th to a (q*L)th pieces of data of the apparatus B, corresponds to an (N+m)th

feature of the data set D, which is represented as $DD_q^{fN+m} = [d_{(q-1)*L+1}^{fN+m}, d_{(q-1)*L+2}^{fN+m}, ..., d_{q*L}^{fN+m}]^T$ .

The data in Table 1 is used as an example. The data subset B is data of the NWDAF entity. For example, service experience, Buffer size, and the like are used as features corresponding to the data subset B. The data in Table 2 is used as an example. The data subset A may be data of the banking business system. However, status, age, job, and the like are used as the feature B of the data subset B.

It is to be noted that, polynomial orders L for the apparatus A and the apparatus B to group are the same.

Grouping (also referred to as packaging) means that all data is divided based on a feature dimension, and each feature is divided into Q groups based on the polynomial order L. By performing grouping, data of a group (packet) can be simultaneously encrypted (Multi input multi output) during subsequent encryption, which speeds up encryption.

Step 403: The apparatus A determines (or generates) an intermediate result A (U^A) of the data subset A by using the model A (W^A) and the data subset A.

For example, $U^A = D^A W^A$, which indicates that each piece of data of the data subset A owned by the apparatus A is multiplied by the parameter W^A of the model A. In another expression, $U^A = [u_1^A, u_2^A, ..., u_P^A]^T$ , where $u_1^A$ represents data obtained by multiplying a first piece of data in the data subset D^A by the parameter A of the model A.

$u_P^A$ represents data obtained by multiplying a Pth piece of data in the data subset D^A by the parameter A of the model A.

Step 404: The apparatus A groups the intermediate result A to obtain a grouped intermediate results A ( $DU^A$ ).

$DU^A = [DU_1^A, DU_2^A, ..., DU_q^A, ..., DU_Q^A]^T$ indicates that the intermediate result A is divided into Q groups, and

a Qth group may include zero-padded data. $DU_1^A$ is a first group of data of the intermediate result A, and data corresponds to a first piece to an Lth piece of data in the intermediate result A is represented as $DU_1^A = [u_1^A, u_2^A, ..., u_L^A]$ . $DU_q^A$ represents an (L*(q - 1)+ 1)th piece to an (L*q)th piece of data of the intermediate result A, that is,

$DU_q^A = [u_{(q-1)*L+1}^A, u_{(q-1)*L+2}^A, ..., u_{q*L}^A]$ . For a last group of data $DU_Q^A$ , if the P pieces of data cannot be divided into Q groups based on L, for the Q$^{th}$ group obtained after P is divided by L, and a 0-padding operation is performed on insufficient data. L = polynomial order. A value of L may be set based on a requirement. This is not limited in this embodiment of this application.

Step 405: The apparatus A encrypts the grouped intermediate result $DU^A$ by using the public key A ($pk^A$), to obtain an encrypted intermediate result A ( $[\![DU^A]\!]$ ), and sends the encrypted intermediate result A to the apparatus B.

A symbol $[\![\cdot]\!]$ represents encryption. The encrypted intermediate result A includes an encrypted intermediate result of each group, which is represented as $[\![DU^A]\!] = \left[ [\![DU_1^A]\!], [\![DU_2^A]\!], \dots, [\![DU_Q^A]\!] \right]$. $[\![DU_1^A]\!]$ represents a first piece to an L$^{th}$ piece of encrypted data of the apparatus A that correspond to a first encrypted group of intermediate results.

In this embodiment, $U^A$ is an intermediate result B in a process of training the model A by using the data subset A. If data is transmitted in plaintext to the apparatus B, original data $D_A$, that is, the data subset A, may be deduced by the apparatus B. Therefore, the intermediate result A needs to be encrypted before transmission. Since the apparatus B receives encrypted data, the apparatus B may perform calculation by using plaintext data of the data subset B, or may perform calculation on a gradient B of the model B after the data subset B is encrypted by using the public key A.

Steps 403' to 405': The apparatus B determines (or generates) an intermediate result B ($U^B$) of the data subset B by using the model B ($W^B$) and the data subset B ($D^B$), and then groups the intermediate results B, to obtain a grouped intermediate result B ($DU^B$). The apparatus B encrypts the grouped intermediate result $DU^B$ by using the public key $pk^B$, to obtain an encrypted intermediate result B ( $[\![DU^B]\!]$ ), and sends the encrypted intermediate result $[\![DU^B]\!]$ to the apparatus A.

$U^B = D^B W^B - Y^B$ represents a result obtained by multiplying each piece of data in the data subset B owned by the apparatus B by a parameter of the model B, and subtracting a label $Y^B$. In another expression, $U^B = [u_1^B, u_2^B, \dots, u_P^B]$, where $u_1^B$ represents intermediate data obtained by multiplying a second piece of data in the data subset $D_B$ by the parameter of the model B, and then subtracting $Y^B$. $u_P^B$ represents data obtained by multiplying a p$^{th}$ piece of data in the data subset B ($D^B$) by a parameter of the model B. $Y^B$ is a label corresponding to each piece of data in the data subset B, and each piece of data subset B corresponds to one label, which is represented as: $Y^B = [y_1^B, y_2^B, \dots, y_P^B]^T$.

The grouped intermediate result $DU^B$ includes an intermediate result B of each group, which is represented as $DU^B = [DU_1^B, DU_2^B, \dots, DU_q^B, \dots, DU_Q^B]^T$. $DU_1^B = [u_1^B, u_2^B, \dots, u_L^B]^T$ represents a first group of intermediate results A. A first group of intermediate results B correspond to a first piece to an L$^{th}$ piece of data. $DU_q^B = [u_{(q-1)*L+1}^B, u_{(q-1)*L+2}^B, \dots, u_{q*L}^B]$ indicates an intermediate result B of a q$^{th}$ group, corresponding to a ((q - 1)*L+1)$^{th}$ piece to a (q*1)$^{th}$ piece of data.

Step 406: The apparatus A merges the encrypted intermediate result B and the intermediate result A, to obtain a merged first intermediate result $[\![DU^B + DU^A]\!]$. Optionally, the apparatus A may further merge the encrypted intermediate result B and the encrypted intermediate result A. The apparatus A encrypts the intermediate result A by using the public key B.

The merged first intermediate result includes a merged intermediate result of each group. The merged intermediate result of each group includes an encrypted intermediate result B of each group and an unencrypted intermediate result A of a corresponding group. For example, $[\![DU^B + DU^A]\!] = \left[ [\![DU_1^B + DU_1^A]\!], \dots, [\![DU_q^B + DU_q^A]\!], \dots, [\![DU_Q^B + DU_Q^A]\!] \right]$, and $[\![DU_q^B + DU_q^A]\!]$ is a merged first intermediate result of a q$^{th}$ group. The merged first intermediate result of the q$^{th}$ group includes an encrypted intermediate result $[\![DU_q^B]\!]$ of the q$^{th}$ group and an unencrypted intermediate result $DU_q^A$ of the q$^{th}$ group.

In an optional implementation, the merged first intermediate result may further include the encrypted intermediate result B and the encrypted intermediate result A. Both the intermediate result A and the intermediate result B use the public key B for homomorphic encryption.

Step 407: The apparatus A determines (or generates) an encrypted gradient A of the model A, that is, $[\![DG^A]\!]$. The gradient A includes an updated value of each parameter of the model A.

In this embodiment of this application, the encrypted gradient A may not mean that the gradient A is encrypted. This is because it is determined that the merged first intermediate result of the gradient A includes an encrypted data subset, for example, the encrypted data subset A and/or the encrypted data subset B.

The gradient A of the model A includes a gradient A corresponding to each parameter of the model A. For example, $[\![DG^A]\!] = [\![[\![DG^{f_1}]\!], ..., [\![DG^{f_n}]\!], ..., [\![DG^{f_N}]\!]]\!]$, where $[\![DG^{f_n}]\!]$ is a gradient corresponding to an $n^{th}$ parameter of the model A. A gradient $[\![DG^{f_n}]\!]$ corresponding to each parameter is determined (or generated) based on the encrypted intermediate result A and the encrypted intermediate result B (or unencrypted intermediate result A and the encrypted intermediate result B), and each group of feature values of corresponding features. For example, $[\![DG^{f_n}]\!] = \sum_{q=1}^{Q} [\![DU_q^B + DU_q^A]\!] DD_q^{f_n}$ is represented as an average obtained by adding the intermediate result B of the $q^{th}$ group and the intermediate result A of the $q^{th}$ group and multiplying a sum by an $n^{th}$ feature value of the $q^{th}$ group. Gradients of $n^{th}$ features of a first group to a $Q^{th}$ group are added to obtain a gradient of an $n^{th}$ feature of the model A. $DD_q^{f_n}$ is an $n^{th}$ feature value of a $(q*(L-1)+1)^{th}$ piece to a $(q*L)^{th}$ piece of data corresponding to the $q^{th}$ group, which is represented as $DD_q^{f_n} = [d_{(q-1)*L+1}^{f_n}, d_{(q-1)*L+2}^{f_n}, ..., d_{q*L}^{f_n}]$.

Step 408: The apparatus A determines (or generates) noise A ($R^A$) of the gradient A, where a set of the noise A of the gradient A includes noise A of each parameter (corresponding to each feature of the data subset A) of the model A, and may be represented as $R^A = [R^{f_1}, ..., R^{f_n}, ..., R^{f_N}]$.

The noise is a random number generated for a feature (where one random number may be generated for each feature, or the apparatus A may generate a random number for all features, and an example in which one feature corresponds to one random number is used in this embodiment of this application). For example, $R^{f_1}$ is a random number corresponding to a second feature (that is, noise A of the second feature), and $R^{f_n}$ is a random number corresponding to an $n^{th}$ feature. A random number corresponding to any feature includes noise of the feature corresponding to each piece of user data in any group, which is represented as $R^{f_n} = [r_1^{f_n} ..., r_l^{f_n}, ..., r_L^{f_n}]$, or noise of the feature corresponding to each piece of data in a plurality of groups. $r_1^{f_n}$ is noise of an $n^{th}$ feature corresponding to a second piece of user data in the group, and $r_L^{f_n}$ is noise of an $n^{th}$ feature corresponding to an $L^{th}$ piece of user data in the group.

Step 409: The apparatus A obtains, based on corresponding noise A of a gradient corresponding to each parameter and a gradient of a corresponding parameter, an encrypted gradient A ($[\![DG^A R]\!]$) including the noise A, and then sends the encrypted gradient A ($[\![DG^A R]\!]$) including the noise A to the apparatus B.

An encrypted gradient A set including the noise A includes an encrypted gradient A of each parameter, and may be represented as $[\![[\![DG^{f_1} + R^{f_1}]\!], ..., [\![DG^{f_n} + R^{f_n}]\!], ..., [\![DG^{f_N} + R^{f_N}]\!]]\!]$. $[\![DG^{f_1} + R^{f_1}]\!] = [\![DG^{f_1}]\!] + [\![R^{f_1}]\!]$ represents a gradient A of an encrypted first parameter plus noise A of a first parameter. The noise may be encrypted noise, or may be unencrypted noise.

Step 406': The apparatus B obtains a merged first intermediate result $[\![DU^B + DU^A]\!]$ based on the grouped intermediate result B ($DU^B$) and the encrypted intermediate result A ($[\![DU^A]\!]$).

In this embodiment of this application, a merged second intermediate result is an intermediate result for generating the gradient B of the model B. The merged second intermediate result includes the unencrypted intermediate result B and the encrypted intermediate result A. Alternatively, the merged second intermediate result includes the encrypted intermediate result A and the encrypted intermediate result B. The intermediate result A and the intermediate result B are encrypted by using the public key A generated by the apparatus A for the intermediate result included in the merged second intermediate result.

The merged first intermediate result is an intermediate result for generating the gradient A of the model A. The merged first intermediate result includes the unencrypted intermediate result A and the encrypted intermediate result B. Alternatively, the merged first intermediate result includes the encrypted intermediate result A and the encrypted intermediate result B. The intermediate result B and/or the intermediate result A are/is encrypted by using the public key B generated by the apparatus B for the intermediate result included in the merged second intermediate result.

The merged second intermediate result $[\![DU^A + DU^B]\!]$ includes a merged intermediate result of each group. The merged intermediate result of each group includes an encrypted intermediate result A of a corresponding group and an unencrypted intermediate result B of a corresponding group. The merged second intermediate result may be represented as

$$[\![DU^A + DU^B]\!] = [\![DU^A]\!] + DU^B = \left[ [\![DU_1^A + DU_1^B]\!], ..., [\![DU_q^A + DU_q^B]\!], ..., [\![DU_Q^A D + U_Q^B]\!] \right]$$ . A merged second intermediate result of a $q^{th}$ group may be represented as $[\![DU_q^A + DU_q^B]\!] = [\![DU_q^A]\!] + DU_q^B$ ,

where $[\![DU_q^A]\!]$ is an encrypted intermediate result A of the $q^{th}$ group, and $DU_q^B$ is an unencrypted intermediate result B of the $q^{th}$ group.

Step 407': The apparatus B determines (or generates) a gradient B ( $[\![DG^B]\!]$ ) of the model B. The gradient B includes an updated value of each parameter of the model A.

The gradient B of the model B includes a gradient A corresponding to each parameter of the model B (that is, a gradient B corresponding to each feature of the model B). For example,

$$[\![DG^B]\!] = \left[ [\![DG^{fN+1}]\!], ..., [\![DG^{fN+m}]\!], ..., [\![DG^{fN+M}]\!] \right]$$ , where $[\![DG^{fN+m}]\!]$ is a gradient B corresponding to an $m^{th}$ parameter of the model B.

Step 408': The apparatus B generates noise B (RB) of the gradient B, where the noise B of the gradient B includes noise A of a gradient corresponding to each parameter of the model B, and may be represented as $R^B = [R^{fN+1},$

$..., R^{fN+m}, ..., R^{fN+M}]$. $R^{fN+m} = \left[ r_1^{fN+m} ... r_l^{fN+m}, ..., r_L^{fN+m} \right]$ represents noise of a gradient corresponding to an $m^{th}$ parameter of the model A. $r_1^{fN+m}$ is noise of an $(N+m)^{th}$ feature corresponding to a first piece of user data in the group.

Step 409': The apparatus B obtains, based on noise B of a gradient corresponding to each parameter and a gradient B of a corresponding parameter, an encrypted gradient B $[\![DG^B R]\!]$ including the noise B, and then sends the encrypted gradient B $[\![DG^B R]\!]$ including the noise B to the apparatus A.

Step 410: The apparatus A decrypts, by using the private key A (*skA*), the encrypted gradient $[\![DG^B R]\!]$ that includes the noise B and that is sent by the apparatus B, to obtain a decrypted gradient B (*DGBR*) including the noise B.

Specifically, the apparatus A decrypts, by using the private key A, a gradient B corresponding to each parameter in the gradient B including the noise B. A decrypted gradient B *(DGBR)* including the noise B includes a gradient B that includes the noise B and that corresponds to each parameter of the model B. For example, $DG^B R = [DG^{fN+1} + R^{fN+1}, ... , DG^{fN+m} + R^{fN+m}, ... , DG^{fN+M} + R^{fN+M}]$, where $DG^{fN+1} + R^{fN+1}$ represents a gradient B of a first parameter of the model B, and $R^{fN+1}$ represents noise B corresponding to the first parameter of the model B. The first parameter of the model B corresponds to an $(N+1)^{th}$ feature in the data set.

Steps 411 and 412: The apparatus A obtains, based on the decrypted gradient B (*DGBR*) including the noise B, a gradient B (*GBR*) including the noise B before grouping, and sends the gradient B (*GBR*) including the noise B before grouping to the apparatus B.

The gradient B *(GBR)* including the noise B before grouping includes a gradient B that includes the noise B and that corresponds to each parameter before grouping, and may be represented as $G^B R = [g^{fN+1}R, ... , g^{fN+m}R, ... , g^{fN+M}R]$, where $g^{fN+1}R$ is a gradient B that includes the noise B and that is of the first parameter of the model B before grouping. $g^{f_{N+1}}R = \sum_{l=1}^{L} g_l^{f_{N+m}}R$ . The first parameter of the model B corresponds to an $(N+1)^{th}$ feature in the data set.

Step 410': The apparatus B decrypts, by using the private key B ($sk^B$), the gradient A ( $[\![DG^A R]\!]$ ) that includes the noise A and that is sent by the apparatus A, to obtain a decrypted gradient A ($DG^A R$) including the noise A.

Specifically, the apparatus B decrypts, by using the private key B ($sk^B$), the gradient A for generating each parameter in the gradient A. A decrypted gradient A ($DG^A R$) including the noise A includes a gradient A that includes the noise A and that corresponds to the parameter of the model A. For example, $DG^A R = [DG^{f_1}R, \ldots, DG^{f_n}R, \ldots, DG^{f_N}R]$, where $DG^{f_1} + R^{f_1}$ represents a gradient A that includes noise A and that is of a first parameter of the model A, and $R^{f_1}$ represents noise B of the first parameter of the model A. The first parameter of the model A corresponds to a first feature of the data set.

Steps 411' and 412': The apparatus B obtains, based on a gradient B set, a gradient B set $G^A R$ including noise before grouping, and sends, to the apparatus A, the gradient B set $G^A R$ including noise corresponding to each feature before grouping. The gradient B set $G^A R$ including noise B before grouping includes a gradient B that includes the noise B and that corresponds to each feature before grouping.

Step 413: The apparatus A obtains, based on a decrypted gradient B set $G^A R$ that includes the noise B and that corresponds to each feature before grouping, a decrypted gradient B set $G^A$ from which the noise B is removed.

The gradient B set $G^A$ includes a gradient of each feature of the parameter of the model B. The gradient B set may be represented as $G^A = [g^{f_1}, \ldots, g^{f_n}, \ldots, g^{f_N}]$. $g^{f_1}$ is a gradient of a second feature. $g^{f_n} = g^{f_n}R - \sum_{l=1}^{L} r_l^{f_n}$ .

Step 414: The apparatus A updates the model A ($W^A$) based on a gradient A for removing the noise A.

Update of the model A may be represented as $W^A = W^A - \eta * G^A$. $\eta$ is a preset learning rate. This is not limited in this embodiment of this application.

Step 413': The apparatus B obtains a gradient B ($G^B$) based on the gradient B ($G^B R$) that includes the noise B and that corresponds to each parameter before grouping.

Step 414': The apparatus B updates the model B ($W^B$) based on the gradient B (G$^B$).

Steps 407 to 414' are repeatedly performed until a direct change of the model parameter is less than a preset value.

In the embodiment corresponding to FIG. 4, the apparatus A and the apparatus B exchange the encrypted intermediate result B and the encrypted intermediate result A, and generate a gradient by using the encrypted intermediate result. Then, a gradient is encrypted and sent to another party. Therefore, encrypted transmission is used during data exchange between the apparatus A and the apparatus B, thereby ensuring data transmission security.

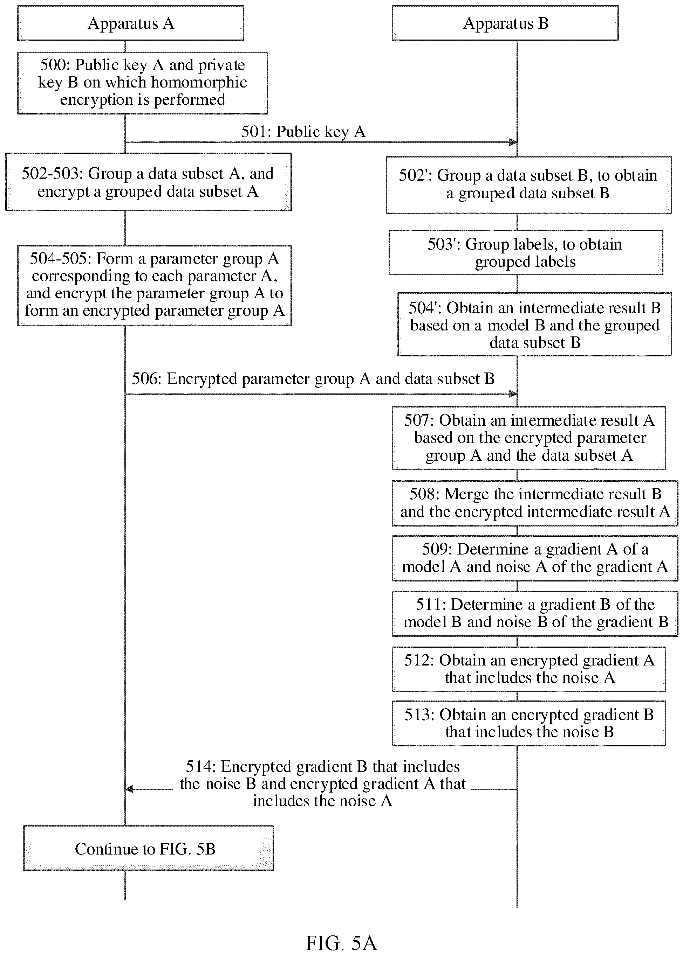

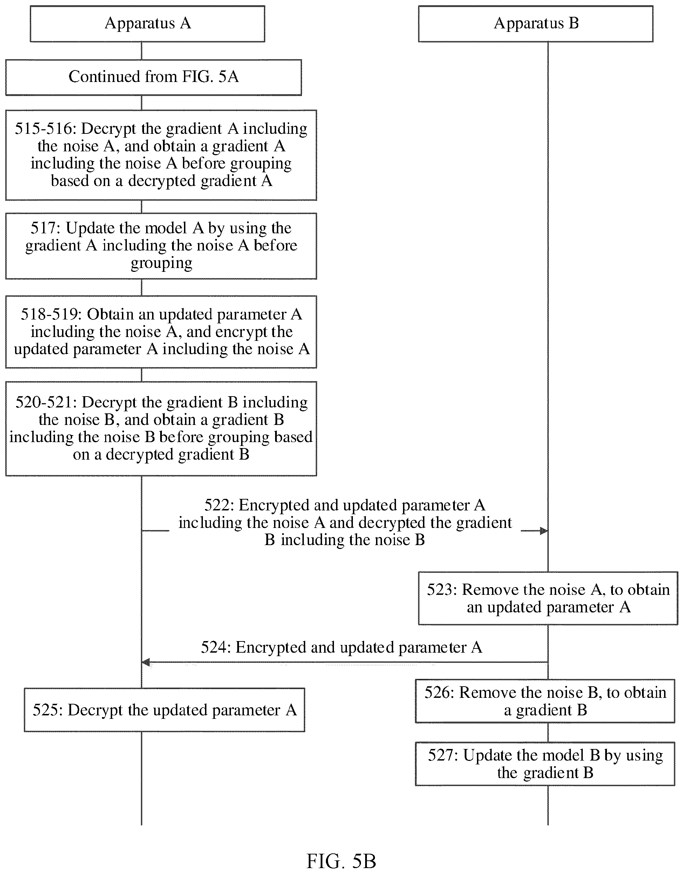

FIG. 5A and FIG. 5B are a flowchart of another model update method according to an embodiment of the present invention, including the following steps.

Steps 500 and 501: The apparatus A generates a public key A ($pk^A$) and a private key A ($sk^A$) for homomorphic encryption, and sends the public key B to the apparatus B.

Step 502: The apparatus A groups the data subset A ($D^A$) to obtain a grouped data subset A($DD^A$).

For a specific method of this step, refer to the description in step 402. Details are not described in this embodiment of this application again.

Step 503: The apparatus A encrypts the grouped data subset A by using the public key A, to obtain an encrypted data subset A ( $[\![DD^A]\!]$ ), where the encrypted data subset A includes data corresponding to each feature of each group. Details are as follows:

$$[\![DD^A]\!] = \begin{bmatrix} [\![DD_1^{f_1}]\!] & \cdots & [\![DD_1^{f_N}]\!] \\ \vdots & [\![DD_q^{f_n}]\!] & \vdots \\ [\![DD_Q^{f_1}]\!] & \cdots & [\![DD_Q^{f_N}]\!] \end{bmatrix}$$

$[\![DD_q^{f_n}]\!]$ represents data corresponding to an $n^{th}$ feature in a $q^{th}$ group after encryption.

Step 504: Form, based on each parameter A of the model A ($W^A$), a parameter group corresponding to each parameter A.

The parameter A of the model A is also referred to as a feature of the model A. Parameters of the model A are in a one-to-one correspondence with features of the data subset A. The parameter A of the model A is represented as $W^A = [w_1^A, w_2^A, ..., w_N^A]$ . $w_1^A$ is a first parameter (or a first feature) of the model A. The model A has N parameters. The forming a parameter group corresponding to each parameter A includes: making L copies of each parameter A to form a group corresponding to the parameter A. L is a polynomial order in FIG. 4. For example, $Dw_n^A = [w_n^A, w_n^A, ..., w_n^A]$ . In other words, an $n^{th}$ group of parameters is a group corresponding to a feature n, and includes L $n^{th}$ parameters.

Each parameter A of the model A is copied for L copies. This is because each parameter A needs to be multiplied by a grouped data subset A (DD$^A$). The parameter A is a vector, and can be changed to a matrix form only after L copies are made, which facilitates matrix multiplication with (DD$^A$).

Step 505: The apparatus A performs homomorphic encryption on a parameter A of each group by using the public key A, to obtain an encrypted parameter A ( $[\![DW^A]\!]$ ).

The encrypted parameter A includes the parameter group corresponding to each encrypted parameter A, which is represented as $[\![DW^A]\!] = [[\![Dw_1^A]\!], [\![Dw_2^A]\!], ..., [\![Dw_N^A]\!]]$ .

Step 506: The apparatus A sends the encrypted parameter A and the encrypted data subset A to the apparatus B.

It is to be noted that, step 502 and step 505 may be performed together.

Step 502': The apparatus B groups a data subset B (D$^B$) to obtain a grouped data subset B (DD$^B$).

For a specific method of this step, refer to the description in step 402'. Details are not described in this embodiment of this application again.

Step 503': The apparatus B groups labels $Y^B$ of each piece of data of the data subset B, to obtain a grouped label set.

Each grouped label set corresponds to L labels. For a method for grouping $Y^B$, refer to the method for grouping a data subset B (D$^B$). Details are not described in this embodiment of this application again.

Steps 504': The apparatus B calculates an intermediate result B (U$^B$) of the data subset B by using the model B ($W^B$)) and the data subset B (D$^B$), and then groups the intermediate results B, to obtain a grouped intermediate result B (DU$^B$).

For specific descriptions of obtaining, by the apparatus B, a grouped intermediate result B, refer to the descriptions in steps 403' and 404'. Details are not described in this embodiment of this application again.

Step 507: The apparatus B obtains an encrypted intermediate result A ( $[\![DU^A]\!]$ ) based on the encrypted parameter A ( $[\![DW^A]\!]$ ) and the encrypted data subset A ( $[\![DD^A]\!]$ ).

For example, a matrix of the encrypted parameter A may be multiplied by a matrix of the encrypted data subset A to obtain the encrypted intermediate result A. The encrypted intermediate result A includes an intermediate result A of each group. The intermediate result A of each group is a sum of intermediate results A of parameters A, which may be represented as:

$$[\![DU^A]\!] = \begin{bmatrix} \sum_{n=1}^{N} [\![DD_1^{f_n}]\!][\![Dw_n^A]\!] \\ \vdots \\ \sum_{n=1}^{N} [\![DD_Q^{f_n}]\!][\![Dw_n^A]\!] \end{bmatrix}$$

Step 508: The apparatus B obtains a merged first intermediate result $[\![DU^B + DU^A]\!]$ based on the grouped intermediate result B (DU$^B$) and the encrypted intermediate result B ( $[\![DU^A]\!]$ ).

For a detailed description in step 508, refer to step 407'. Details are not described in this embodiment of this application again.

In an optional implementation, the apparatus B may further perform homomorphic encryption on the grouped intermediate result B by using the public key A, and obtain a merged intermediate result based on the encrypted intermediate result B and the encrypted intermediate result A. In this embodiment, the merged intermediate result generated by using the encrypted intermediate result A and the encrypted intermediate result B may be used to determine (or generate) an encrypted gradient A of the model A and an encrypted gradient B of the model B.

Step 509: The apparatus B determines (or generates) an encrypted gradient A ( $[\![DG^A]\!]$ ) of the model A. The gradient A includes an updated value of each parameter A of the model A.

For a detailed description of obtaining, by the apparatus B, an encrypted gradient A ( $[\![DG^A]\!]$ ), refer to the description in step 407. Details are not described in this embodiment of this application again.

Step 510: The apparatus B determines (generates) noise A ($R^A$) of the model A, where the noise A of the model A is noise A of each parameter A (which is also each feature) of the model A, and may be represented as $R^A = [R^{f_1}, \ldots, R^{f_n}, \ldots, R^{f_N}]$.

For a detailed description of determining (or generating), by the apparatus B, noise A ($R^A$) of the model A, refer to the description in step 408. Details are not described in this embodiment of this application again.

Step 511: The apparatus B obtains, based on noise A corresponding to each gradient and a gradient A of a corresponding parameter, an encrypted gradient A ( $[\![DG^A R]\!]$ ) including the noise A.

For a detailed description of obtaining, by the apparatus B, an encrypted gradient A ( $[\![DG^A R]\!]$ ) including the noise A, refer to the description in step 409. Details are not described in this embodiment of this application again.

Step 512: The apparatus B determines (or generates) a gradient B ( $[\![DG^B]\!]$ ) of the model B. The gradient B includes an updated value of each parameter of the model B.

For a detailed description of obtaining, by the apparatus B, a gradient B ( $[\![DG^B]\!]$ ) of the model B, refer to the description in step 407'. Details are not described in this embodiment of this application again.

513: The apparatus B generates noise B (RB) of the model B. For a detailed description of obtaining noise B ($R^B$), refer to the description in step 408'. Details are not described in this embodiment of this application again.

Step 514: The apparatus B obtains, based on noise B corresponding to each parameter and a gradient B of a corresponding parameter, an encrypted gradient B ( $[\![DG^B R]\!]$ ) including the noise B. The encrypted gradient B ( $[\![DG^B R]\!]$ ) including the noise B includes a gradient B including the noise B of each parameter B of the model B, and may be represented as:

$$[\![DG^B R]\!] = [[\![DG^{f_{N+1}} + R^{f_{N+1}}]\!], \ldots, [\![DG^{f_{N+m}} + R^{f_{N+m}}]\!], \ldots, [\![DG^{f_{N+M}} + R^{f_{N+M}}]\!]]$$

$[\![DG^{f_{N+m}} + R^{f_{N+m}}]\!] = [\![DG^{f_{N+m}}]\!] + R^{f_{N+m}}$ is an encrypted gradient of an (N+m)$^{th}$ feature of the data set D and noise of a corresponding feature, or may be an encrypted gradient of an m$^{th}$ parameter of the model B and noise of the m$^{th}$ parameter.

Step 514: The apparatus B sends, to the apparatus A, the encrypted gradient B ( $[\![DG^B R]\!]$ ) including the noise B and the encrypted gradient A ( $[\![DG^A R]\!]$ ) including the noise A.

Step 515: After receiving the gradient A ( $[\![DG^A R]\!]$ ) including the noise A and the gradient B ( $[\![DG^B R]\!]$ ) including the noise B that are sent by the apparatus B, the apparatus A decrypts, by using the private key A ($sk^A$), the encrypted gradient A ( $[\![DG^A R]\!]$ ) including the noise A, to obtain a decrypted gradient A ($DG^A R$) including the noise A. The decrypted gradient A ($DG^A R$) including the noise A includes a gradient A that includes the noise A and that corresponds to each parameter A of the model A. For example, $DG^A R = [DG^{f_1} R, \ldots, DG^{f_n} R, \ldots, DG^{f_N} R]$, where $DG^{f_1} + R^{f_1}$ represents a gradient A of a first parameter, and $R^{f_1}$ represents noise A of the first parameter. For this step, refer to the description in step 410'.

Step 516: The apparatus A obtains, based on the decrypted gradient A ($DG^A R$) including the noise A, a gradient A ($G^A R$) including the noise A before grouping.

The gradient A ($G^A R$) including the noise A before grouping includes a gradient A that includes the noise A and that corresponds to each parameter A before grouping, which is represented as $G^A R = [g^{f_1}R, \ldots , g^{f_n}R, \ldots , g^{f_N}R]$, where $g^{f_n}R$ is a gradient A including the noise A of an $n^{th}$ feature before grouping. $g^{f_n}R$ is determined based on the gradient A including the noise A of the feature of each piece of data in a group, which may be represented as $g^{f_n}R =$

$$\sum_{l=1}^{L} g_l^{f_n} R .$$

In other words, a decrypted value a result obtained by grouping values of a same feature, and a gradient of a corresponding parameter can be obtained only after a plurality of values of a same feature (or parameter) in a same group are averaged.

Step 517: The apparatus A updates the model A $WR^A = W^A - \eta * G^A R$ based on the gradient A that includes the noise A and that corresponds to each parameter before grouping.

In this step, the update of the model A carries the noise A. There is no value of the noise A on a side of the apparatus A. Therefore, the update of the model A obtained in this step is generated by the gradient A with noise, and parameters of an updated model A are not a target model either.

Step 518: The apparatus A obtains, based on the updated model A ($WR^A$), a parameter A including the noise A of the updated model A, which is represented as $WR^A = \left[ wr_1^A, wr_2^A, \ldots , wr_N^A \right]$.

Step 519: The apparatus A performs homomorphic encryption on the parameter A including the noise A of the updated model A by using the public key A, to obtain an encrypted parameter A ( $[\![WR^A]\!]$ ) including the noise A.

$$[\![WR^A]\!] = [[\![wr_1^A]\!], [\![wr_2^A]\!], \ldots , [\![wr_N^A]\!]] .$$

Step 520: The apparatus A decrypts, by using the private key A ($sk^A$), the gradient B ( $[\![DG^B R]\!]$ ) that includes the noise B and that is sent by the apparatus B, to obtain a decrypted gradient B *(DGBR)* including the noise B. For step 521, refer to the detailed description in step 410. Details are not described in this embodiment of this application again.

$$DG^B R = [DG^{f_{N+1}} + R^{f_{N+1}}, \ldots , DG^{f_{N+m}} + R^{f_{N+m}}, \ldots , DG^{f_{N+M}} + R^{f_{N+M}}]$$

$$DG^{f_{N+m}} + R^{f_{N+M}} = [g_1^{f_{N+m}} R, g_2^{f_{N+m}} R, \ldots , g_L^{f_{N+m}} R]$$

Step 521: The apparatus A obtains, based on a decrypted gradient B including the noise B, a gradient B ($G^B R$) including the noise B before grouping.

The gradient B ($G^B R$) including the noise B before grouping includes a gradient B that includes the noise B and that corresponds to each parameter before grouping, and may be represented as $G^B R = [g^{f_{N+1}}R, \ldots , g^{f_{N+m}}R, \ldots , g^{f_{N+M}}R]$, where $g^{f_{N+1}}R$ is a gradient A that includes noise and that corresponds to an $(N+1)^{th}$ feature before grouping.

$$g^{f_{N+1}}R = \sum_{l=1}^{L} g_l^{f_{N+m}} R .$$

Step 522: The apparatus A sends, to the apparatus B, a gradient A set $G^B R$ including the noise A before grouping and an encrypted updated parameter A ( $[\![WR^A]\!]$ ) including the noise A.

It is to be noted that, the apparatus A may separately send $G^B R$ and $[\![WR^A]\!]$ to the apparatus B, or may send $G^B R$ and $[\![WR^A]\!]$ to the apparatus B together.

In addition, there is no time sequence between steps 520-521 and steps 515-516 performed by the apparatus A.

Step 523: The apparatus B removes, based on stored noise A of each gradient A, the noise A in the encrypted updated parameter A ( $[\![WR^A]\!]$ ) including the noise A\, to obtain an encrypted updated parameter A. The encrypted updated parameter A includes an encrypted updated parameter A, which may be represented as:

$$[\![W^A]\!] == [[\![w_1^A]\!], [\![w_2^A]\!], \ldots , [\![w_N^A]\!]]$$

$$\llbracket Dw_{\text{n}}^{A} \rrbracket = \llbracket Dwr_{\text{n}}^{A} \rrbracket - \eta * \sum_{l=1}^{L} r_{l}^{fn}$$

Step 524: The apparatus B sends each encrypted updated parameter A $\llbracket w_{\text{n}}^{A} \rrbracket$ to the apparatus A.

Step 525: The apparatus A decrypts each encrypted updated parameter A $\llbracket w_{\text{n}}^{A} \rrbracket$ by using the private key A, to obtain an updated parameter A ( $w_{\text{n}}^{A}$ ) of the model A.

Step 524: The apparatus B removes, based on stored noise B, the noise B in the gradient B ($G^{B}R$) including the noise B, to obtain a gradient B set. The gradient B set may be represented as $G^{B} = [g^{fN+1}, \ldots, g^{fN+m}, \ldots, g^{fN+M}]$.

$$g^{fN+m} = g^{fN+m}R - \sum_{l=1}^{L} r_{l}^{fN+m}$$

Step 525: The apparatus B updates the model B ($W^{B}$) based on the gradient B ($G^{B}$). The model B may be represented as $W^{B} = W^{B} - \eta * G^{B}$, where $\eta$ is a preset learning rate. This is not limited in this embodiment of this application.

Step 504' to step 525 are repeatedly performed until a direct change of the model parameter is less than a preset value.

In this embodiment of this application, the apparatus A performs block encryption on a second data set. The apparatus B calculates the gradient B and the gradient A, and the apparatus A decrypts the gradient B and the gradient A. Finally, the apparatus B performs denoising processing on a decrypted gradient B and a decrypted gradient A, and then updates the model B and the model A based on the gradient B and the gradient A on which denoising processing is performed. In this embodiment, gradient transmission is not only encrypted, but also includes noise, so that it is more difficult to obtain original data of a peer end by using the gradient, thereby improving data security of two parties.

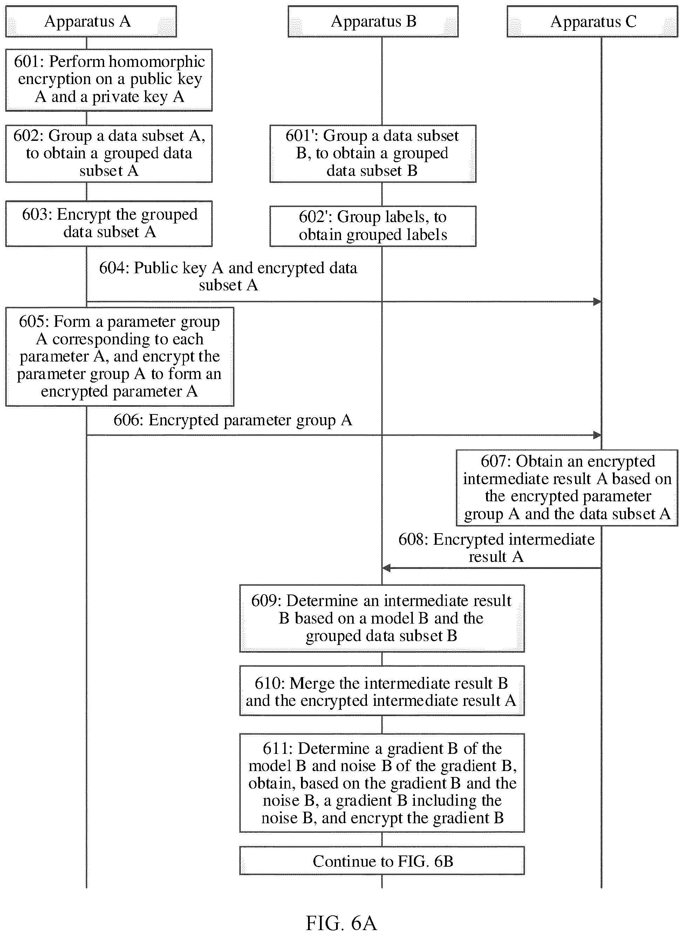

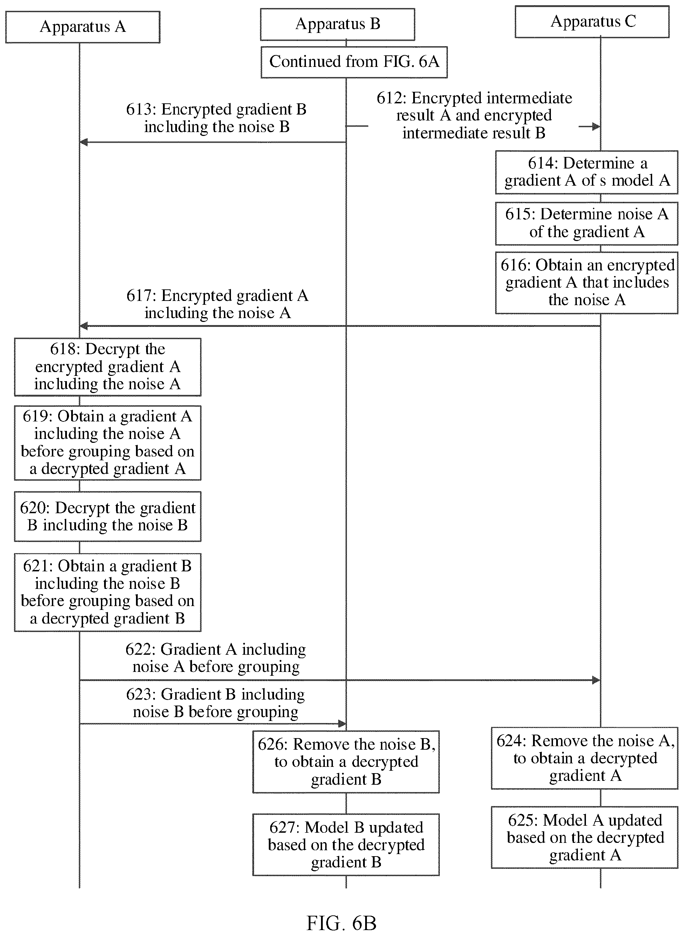

FIG. 6A and FIG. 6B are a flowchart of still another embodiment of a method for updating a model parameter according to an embodiment of this application. In this embodiment, a third party calculates encrypted data. The method embodiment includes the following steps.

Step 601: The apparatus A generates a public key A ($pk^{A}$) and a private key A ($sk^{A}$) for homomorphic encryption.

Steps 602 and 603: The apparatus A groups the data subset A ($D_{A}$) to obtain a grouped data subset A ($DD^{A}$), and encrypts the grouped data subset A by using the public key A, to obtain an encrypted data subset A $\llbracket DD^{A} \rrbracket$.

For detailed descriptions of step 602 and step 603, refer to the descriptions in step 502 and step 503. Details are not described in this embodiment of this application again.

Step 604: The apparatus A sends the public key A ($pk^{A}$) and the encrypted data subset A $\llbracket DD^{A} \rrbracket$ to an apparatus C.

Step 605: The apparatus A forms, based on each parameter A of a model A ($W^{A}$), a parameter group A corresponding to each parameter A, and then performs homomorphic encryption on each parameter group A by using the public key A, to obtain an encrypted parameter group A ( $\llbracket DW^{A} \rrbracket$ ).

For a detailed description of step 605, refer to the descriptions in step 504 and step 505. Details are not described in this embodiment of this application again.

Step 606: The apparatus A sends an encrypted parameter B set $\llbracket DW^{A} \rrbracket$ to the apparatus C.

In an optional implementation, the apparatus A may not form a parameter group, but encrypt each parameter A of the model A and send an encrypted parameter A to the apparatus C.

It is to be noted that, step 604 and step 606 are performed together.

Step 601': The apparatus B groups a data subset B ($D^{B}$) to obtain a grouped data subset B ($DD^{B}$).

For a specific method of this step, refer to the description in step 402'. Details are not described in this embodiment of this application again.

Step 602': The apparatus B groups labels $Y^{B}$ of each piece of data of the data subset B, to obtain grouped labels.

Each label group after grouping corresponds to L labels. For a method for grouping $Y^{B}$, refer to the method for grouping $D^B$. Details are not described in this embodiment of this application again.

Step 607: The apparatus C obtains an encrypted intermediate result A ( $[\![DU^A]\!]$ ) based on the encrypted parameter A ( $[\![DW^A]\!]$ )) and the encrypted data subset A ( $[\![DD^A]\!]$ ).

For a detailed description of step 607, refer to the description in step 507. Details are not described in this embodiment of this application again.

Step 608: The apparatus C sends the encrypted intermediate result A ( $[\![DU^A]\!]$ ) to the apparatus B.

Steps 609: The apparatus B determines (or generates) an intermediate result B ($U^B$) of the data subset B by using the model B ($W^B$), the data subset B ($D^B$), and the grouped labels, and then groups the intermediate results B, to obtain a grouped intermediate result B ($DU^B$).

For specific descriptions of obtaining, by the apparatus B, a grouped intermediate result B, refer to the descriptions of steps 403' and 404'. Details are not described in this embodiment of this application again.

Step 610: The apparatus B obtains a merged first intermediate result $[\![DU^B+DU^A]\!]$ based on the grouped intermediate result B ($DU^B$) and the encrypted intermediate result A $[\![DU^A]\!]$ ).

For a detailed description of step 610, refer to the description in step 406'. Details are not described in this embodiment of this application again.

In an optional implementation, the apparatus B may further perform homomorphic encryption on the grouped intermediate result B by using the public key A, to obtain an encrypted intermediate result B, and merge the encrypted result B and the encrypted intermediate result A, to obtain a merged first intermediate result. If the apparatus B needs to encrypt the grouped intermediate result B by using the public key A, the apparatus B needs to first obtain the public key A.

Step 611: The apparatus B calculates a gradient B ( $[\![DG^B]\!]$ ) of the model B, and generates noise B (RB) of the model B, where the noise B of the model B includes noise B of each parameter of the model B. Then, the apparatus B obtains, based on noise B corresponding to each parameter B and a gradient B of a corresponding feature, an encrypted gradient B ( $[\![DG^BR]\!]$ ) including the noise B, and sends the encrypted gradient B ( $[\![DG^BR]\!]$ ) including the noise B to the apparatus A.

For a detailed description of step 611, refer to the descriptions in step 407' and step 409'. Details are not described in this embodiment of this application again.

Step 612: The apparatus B sends the merged first intermediate result $[\![DU^B+DU^A]\!]$ to the apparatus C.

In this embodiment of this application, a core calculation process is performed on a side B and a side C, and calculation on the side B and the side C is performed after encryption, and ciphertext calculation is performed on the side B and the side C. Therefore, gradient information obtained through calculation is ciphertext. The update of the model requires plaintext model parameters. Therefore, the ciphertext obtained through calculation has to be sent to a side A side for decryption. In addition, to prevent the side A from obtaining a plaintext gradient, the calculated gradient needs to be added to a random number to ensure that a real gradient cannot be obtained even if the side A performs decryption.

Step 613: The apparatus B sends the encrypted gradient B $[\![DG^BR]\!]$ including the noise B to the apparatus A.

Step 614: The apparatus C determines (or generates) a gradient A of the model Abased on the merged first intermediate result A and the encrypted parameter A of the model A.

Step 614 is the same as step 509, and details are not described in this embodiment of this application again.

Step 615: The apparatus C determines (or generates) noise A ($R^A$) of the gradient A, where the noise A of the gradient A includes noise A corresponding to each parameter (which is also each feature) of the model A, and may be represented as $R^A = [R^{f_1}, \ldots, R^{f_n}, \ldots, R^{f_N}]$.

For a detailed description of determining (or generating), by the apparatus C, noise A ($R^A$) of the model A, refer to the description in step 408. Details are not described in this embodiment of this application again.

Step 616: The apparatus C performs homomorphic encryption by using the public key Abased on the noise A corresponding to each parameter A and the gradient A of the corresponding parameter, to obtain an encrypted gradient A ( $[\![DG^AR]\!]$ ) including the noise A.

For a detailed description of obtaining, by the apparatus C, an encrypted gradient A ( $[\![DG^A R]\!]$ ) including the noise A, refer to the description in step 409. Details are not described in this embodiment of this application again.

Step 617: The apparatus C sends the encrypted gradient A $[\![DG^A R]\!]$ including the noise A to the apparatus A.

Step 618: After receiving the encrypted gradient A ( $[\![DG^A R]\!]$ ) including the noise A and a gradient A set $[\![DG^B R]\!]$ including the noise A that are sent by the apparatus C, the apparatus A decrypts, by using the private key A ($sk^A$), the encrypted gradient A ( $[\![DG^A R]\!]$ ) including the noise A, to obtain a decrypted gradient A *(DGAR)* including the noise A. The decrypted gradient A *(DGAR)* including the noise A includes a gradient A that includes the noise A and that corresponds to each parameter A of the model A. For example, $DG^A R = [DG^{f_1}R, ... , DG^{f_n}R, ... , DG^{f_N}R]$, where $DG^{f_1} + R^{f_1}$ represents a gradient A of a first parameter A, and $R^{f_1}$ represents noise A of a first gradient A. For this step, refer to the description in step 410'.

Step 619: The apparatus A obtains, based on the decrypted gradient A ($DG^A R$) including the noise A, a gradient A ($G^A R$) including the noise A before grouping. For a detailed description of this step, refer to the description in step 517. Details are not described in this embodiment of this application again.

Step 620: The apparatus A decrypts, by using the private key A ($sk^A$), the encrypted gradient B ( $[\![DG^B R]\!]$ ) including the noise B, to obtain a decrypted gradient B ($DG^B R$) including the noise B.

Step 621: The apparatus A obtains, based on a decrypted gradient B ($DG^B R$) including the noise B, a gradient B ($G^B R$) including the noise B before grouping. For a detailed description of this step, refer to the description in step 517. Details are not described in this embodiment of this application again.

Step 622: The apparatus A sends, to the apparatus C, the gradient A including the noise A before grouping.

Step 623: The apparatus A sends, to the apparatus B, the gradient B including the noise B before grouping.

Step 624: The apparatus C removes, based on stored noise A of each gradient, noise A in the gradient A including the noise A, to obtain a gradient A ($G^A$).

Step 625: The apparatus C updates the model B $WR^A = W^A - \eta * G^A$ based on the gradient A corresponding to each parameter before grouping.

Step 626: The apparatus B removes, based on stored noise B corresponding to each parameter B of the model B, noise B in the gradient B including the noise B, to obtain a gradient B ($G^B$).

Step 627: The apparatus B updates the model B: $WR^B = W^B - \eta * G^B$ based on the gradient B that corresponds to each parameter before grouping.

Step 610 to step 627 are repeatedly performed until a direct change of the model parameter is less than a preset value.

According to this embodiment of this application, some calculation steps are for the apparatus C, so that calculation performed by the apparatus B can be reduced. In addition, since interaction between the apparatus A, the apparatus C, and the apparatus B is grouped and encrypted data, or a gradient of a model with noise, data security can be further ensured.

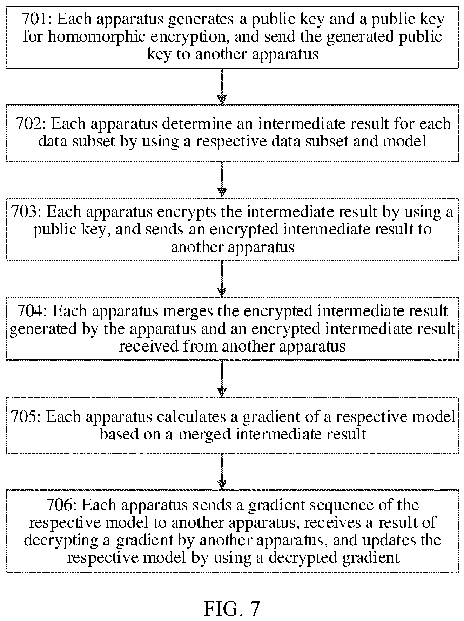

FIG. 7 is a flowchart of another model update method according to an embodiment of the present invention. In this embodiment, different features (values) of data of a same user are respectively located in a plurality of apparatuses (it is assumed that there are three apparatuses in embodiments of this application), but only data in one apparatus includes a label. In this case, a model in a scenario of vertical federation includes two or more models A ($W^{A1}$ and $W^{A2}$), if there are H apparatuses A, there are H models ($W^{AH}$) and models B ($W^B$). A parameter of the model A ($W^A$) may be represented as $W^A = [w_1^A, w_2^A, ..., w_N^A]$ , and a parameter of the model B ($W^B$) may be represented as $W^B = [w_1^B, w_2^B, ..., w_M^B]$ . Different models A have different parameters. In this embodiment of this application, it is assumed that one parameter of the model corresponds to one feature of in the data subset.

Different from the embodiment corresponding to FIG. 4, in an encryption phase, each apparatus generates an aggregated public key by using a public key (including a public key A1 generated by an apparatus A-1, a public key A-2 generated by an apparatus A-2, and a public key B generated by an apparatus B) generated by the apparatus, and each apparatus encrypts a data subset of the apparatus by using the aggregated public key. Each apparatus sends, to another apparatus, an encrypted data subset, an encrypted intermediate result and gradient that are generated based on the encrypted data subset, and/or noise included in the encrypted gradient. For example, in a broadcast manner, an apparatus A1 sends the encrypted data subset, intermediate result, gradient, and/or noise to the apparatus B or an apparatus A2. In another example, the apparatus A1 separately sends an encrypted data subset $D^{A1}$, intermediate result $DU^{A1}$, and/or noise A1 to the apparatus B or A1.

For ease of description, each apparatus participates in training of a vertical federated model, but data included in only one apparatus is allowed to be labeled data (in this embodiment of this application, data of the apparatus B is labeled data), and data included in another apparatus is unlabeled data. It is assumed that data of a total of H apparatuses is unlabeled data, an apparatus including the unlabeled data may be represented as A1 to AN, and is collectively referred to as an apparatus A.

In this embodiment of this application, a data subset having a label is referred to as a data subset B, and an apparatus storing the data subset B is referred to as an apparatus B. Another apparatus that stores unlabeled data is referred to as an apparatus A. In this embodiment of this application, there are two or more apparatuses A.

As shown in FIG. 7, this embodiment of this application includes the following steps.

701: Each apparatus generates a public key and a private key for homomorphic encryption, and sends the public key generated by the apparatus to another apparatus. Then, an aggregated public key is generated based on the public key generated by the apparatus and a received public key generated by another apparatus.

The apparatus A1 is used as an example. The apparatus A1 generates a public key A1 ($pk^{A1}$) and a private key A1 ($sk^{A1}$) for homomorphic encryption, receives a public key B ($pk^B$) sent by the apparatus B and a public key A2 ($pk^{C2}$) sent by the apparatus A2, and separately sends the public key A1 to the apparatus B and the apparatus A2.

The apparatus A1 generates an aggregated public key $pk^{All}$ based on the public key A1, the public key A2, and the public key B.

The apparatus B and the apparatus A2 also perform the same steps performed by the apparatus A1. Details are not described in this embodiment of this application again.

Step 702: Each apparatus determines (or generates) an intermediate result for each data subset by using a respective data subset and a respective model.

It is to be noted that, for a detailed description of step 702, refer to the description in step 403. Details are not described in this embodiment of this application again.

Step 703: Each apparatus encrypts own intermediate result by using an aggregated public key, and sends an encrypted intermediate result to the another apparatus.

The apparatus A1 is used as an example. The apparatus A1 encrypts an intermediate result A1 by using the aggregated public key, and sends an encrypted intermediate result A1 (( $[\![U^{A1}]\!]$ )) to the apparatus B and the apparatus A2.

The apparatus B is used as an example. The apparatus B encrypts an intermediate result B by using the aggregated public key, and sends an encrypted intermediate result B ( $[\![U^B]\!]$ ) to the apparatus A1 and the apparatus A2.

The apparatus A2 is used as an example. The apparatus A2 encrypts an intermediate result A2 ($U^{A2}$) by using the aggregated public key, and sends an encrypted intermediate result A2 ( $[\![U^{A2}]\!]$ ) to the apparatus A1 and the apparatus B.

In this embodiment, an intermediate result used in each model training process is generated based on a data subset of each apparatus and a model of each apparatus. For example, the intermediate result A1 is determined (or generated) based on the model A1 and the data subset A1. The intermediate result A2 is determined (or generated) based on the model A2 and the data subset A2. The intermediate result B is determined (or generated) based on the model B and the data subset B. In this embodiment of this application, the intermediate result is encrypted by using an aggregated private key and then sent to another apparatus, so that an untrusted third party can be prevented from obtaining data based on the intermediate result, thereby ensuring data security.

Step 704: Each apparatus generates a merged intermediate result based on the determined (or generated) encrypted intermediate result and the received encrypted intermediate result sent by the another apparatus.

In an example, the merged intermediate result is represented as $[\![U^B+U^A+U^C]\!]$ .

Step 705: Each apparatus calculates a gradient of each model based on the merged intermediate result.

The apparatus A1 is used as an example. The gradient of the model A1 includes a gradient corresponding to each parameter of the model A1, and may be represented as $[\![G^{A1}]\!] = [\![G^{f_1}]\!], ..., [\![G^{f_n}]\!], ..., [\![G^{f_N}]\!]$ , where $[\![G^{f_n}]\!]$ is a gradient corresponding to an $n^{th}$ feature of the model A1. $[\![G^{f_n}]\!] = [\![U^B+U^{A1} + U^{A2}]\!]D^{f_n}$ . $D^{f_n}$ is data corresponding to an $n^{th}$ feature in the data subset A1.

Step 706: Each apparatus sends a corresponding gradient to another apparatus, and receives a result of decrypting the gradient by the another apparatus. Then, the respective model is updated by using a decrypted gradient.

In an optional implementation, step 706 may be performed in a sequential decryption manner, which is specifically as follows:

Using the apparatus A1 as an example, the apparatus A1 sends a gradient $[\![G^{A1}]\!]$ to the apparatus B or A2 in sequence, and after receiving a gradient decrypted by the apparatus B or the apparatus A2, sends the gradient decrypted by the apparatus B or the apparatus A2 to the apparatus A2 or the apparatus B until all apparatuses decrypt the gradient.

The apparatus B or the apparatus A2 decrypts the gradient $[\![G^{A1}]\!]$ by using a respective private key.

In an optional implementation, step 706 may be performed in a separate decryption manner, which is specifically as follows:

Using the apparatus A1 as an example, the apparatus A1 separately sends a gradient $[\![G^{A1}]\!]$ to the apparatus B and the apparatus A2; after receiving gradients decrypted by the apparatus B and the apparatus A2, the apparatus A1 synthesizes the gradients decrypted by the apparatus B and the apparatus A2 to obtain a final decryption result.

The apparatus B and the apparatus A2 decrypt the gradients $[\![G^{A1}]\!]$ by using respective private keys.

The apparatus A1 is used as an example. For update of the model A1, refer to the description in step 414.

In an optional implementation, in step 706, each apparatus may not need to send the gradient to another apparatus for decryption, but directly use the encrypted gradient to perform model update.

When a model gradient is updated in a ciphertext state, after several rounds of model update, a process of decrypting an encrypted parameter is optional, to calibrate a model parameter in the ciphertext state. Calibration of the model parameter of either party requires an agent to be responsible for the calibration of the encrypted parameter of the party. This operation can be implemented in either of the following manners:

In a first implementation, parameter parties perform decryption separately. Using the apparatus A1 as an example, an encrypted model parameter of a to-be-calibrated party A1 is sent to an agent B after noise is added. The agent sends the encrypted model parameter after noise addition to other parties separately, and receives decryption results returned by the parties. In this case, the agent decrypts the encrypted model parameter after noise addition, and synthesizes the decryption results of the parties to obtain a plaintext noisy model parameter, the model parameter is encrypted by using a synthesized public key and then fed back to the apparatus A1. The apparatus A1 performs a ciphertext denoising operation on the returned encryption model parameter to obtain a calibrated encrypted model parameter.

In a second implementation, parameter parties perform decryption in sequence. Using the apparatus A1 as an example, an encrypted model parameter of a to-be-calibrated party A1 is sent to an agent B after noise R1 (in ciphertext) is added, and the agent sends the parameter to other parties in sequence after noise RB (in ciphertext) is added. The parties participating in this cycle add noise (in ciphertext) in sequence, and finally return the parameter to the agent B. The agent sends, to each party (including A1 and B), the encrypted model parameter to which noise of each party is added. Each party decrypts the parameter and returns it to the agent B. The agent B obtains a plaintext model parameter that carries the noise of each party. Then, the agent B performs encryption by using a synthetic key, invokes all parties except A1 in sequence to perform denoising processing (in a ciphertext state), and returns the data to A1. A1 denoises R1 in the ciphertext state to obtain a calibrated encrypted model parameter.

Compared with the embodiment corresponding to FIG. 4, in the embodiment corresponding to FIG. 7, three or more apparatuses participate in vertical federated learning, each apparatus encrypts an intermediate result by using an aggregated public key, and the apparatus decrypts, by using a private key of the apparatus, a gradient generated by another apparatus. In this way, in scenario of vertical federated learning, data security is ensured. In addition, since an encryption operation is performed only once by each party, a quantity of interactions is reduced, and network resources are saved.

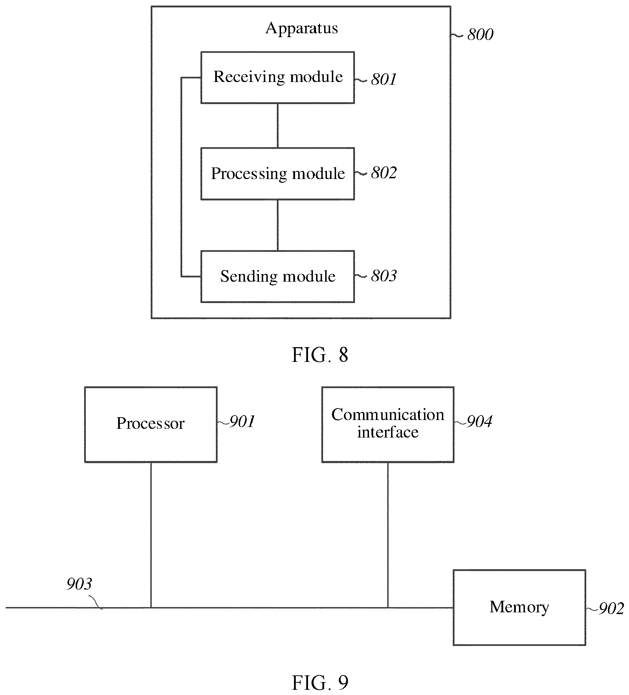

FIG. 8 shows an apparatus according to an embodiment of this application. The apparatus includes a receiving module 801, a processing module 802, and a sending module 803.

The processing module 802 is configured to generate a first intermediate result based on a first data subset. The receiving module 801 is configured to receive an encrypted second intermediate result sent by a second apparatus, where the second intermediate result is generated based on a second data subset corresponding to the second apparatus. The processing module 802 is further configured to obtain a first gradient of a first model, where the first gradient of the first model is generated based on the first intermediate result and the encrypted second intermediate result; and after being decrypted by using a second private key, the first gradient of the first model is for updating the first model, and the second private key is a decryption key generated by the second apparatus for homomorphic encryption.

Optionally, the second intermediate result is encrypted by using a second public key that is generated by the second apparatus for homomorphic encryption, and the processing module 802 is further configured to generate a first public key and a first private key for homomorphic encryption, and encrypt the first intermediate result by using the first public key.

Optionally, the sending module 803 is configured to send the encrypted first intermediate result.

In another optional implementation, the sending module 803 is configured to send an encrypted first data subset and an encrypted first parameter of a first model, where the encrypted first data subset and the encrypted first parameter are for determining (or generating) an encrypted first intermediate result. The receiving module 801 is configured to receive an encrypted first gradient of the first model, where the first gradient of the first model is determined (or generated) based on the encrypted first intermediate result, the encrypted first parameter, and an encrypted second intermediate result. The processing module 802 is configured to decrypt the encrypted first gradient by using a first private key, where the decrypted first gradient of the first model is for updating the first model.

In another optional implementation, the receiving module 801 is configured to receive the encrypted first intermediate result and the encrypted second intermediate result, and receive a parameter of the first model. The processing module 802 is configured to determine (or generate) a first gradient of the first model based on the encrypted first intermediate result, the encrypted second intermediate result, and the parameter of the first model, decrypt the first gradient, and update the first model based on the decrypted first gradient.

In another optional implementation, the modules in the apparatus in FIG. 8 may be further configured to perform any step performed by any apparatus in the method procedures in FIG. 3 to FIG. 7. Details are not described in this embodiment of this application again.

In an optional implementation, the apparatus may be a chip.

FIG. 9 is a schematic diagram of a hardware structure of an apparatus 70 according to an embodiment of this application. The apparatus may be an entity or a network element in FIG. 2A, or may be an apparatus in FIG. 2B. The apparatus may be any apparatus in FIG. 3 to FIG. 7.

The apparatus shown in FIG. 9 may include a processor 901, a memory 902, a communication interface 904, an output device 905, an input device 906, and a bus 903. The processor 901, the memory 902, the communication interface 904, the output device 905, and the input device 906 may be connected by using the bus 903.

The processor 901 is a control center of a computer device, may be a general-purpose central processing unit (central processing unit, CPU), or may be another general-purpose processor. The general-purpose processor may be a microprocessor, any conventional processor, or the like.

In an example, the processor 901 may include one or more CPUs.

The memory 902 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a magnetic disk storage medium or another magnetic storage device, or any other medium capable of carrying or storing expected program code in a form of an instruction or data structure and capable of being accessed by a computer. This is not limited herein.

In a possible implementation, the memory 902 may be independent of the processor 901. The memory 902 may be connected to the processor 901 by using the bus 903, and is configured to store data, instructions, or program code. When invoking and executing the instructions or the program code stored in the memory 902, the processor 91 can implement the machine learning model update method provided in embodiments of this application, for example, the machine learning model update method shown in any one of FIG. 3 to FIG. 7.

In another possible implementation, the memory 902 may also be integrated with the processor 701.

The communication interface 904 is configured to connect the apparatus to another device through a communication network. The communication network may be the Ethernet, a radio access network (radio access network, RAN), a wireless local area network (wireless local area network, WLAN), or the like. The communication interface 904 may include a receiving unit configured to receive data and a sending unit configured to send data.

The bus 903 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

It is to be noted that, the structure shown in FIG. 9 does not constitute a limitation on a computer device 90. In addition to the components shown in FIG. 9, the computer device 70 may include more or fewer components than those shown in the figure, or some components may be combined, or a different component deployment may be used.

The foregoing mainly describes the solutions provided in embodiments of this application from the perspective of the methods. To implement the foregoing functions, corresponding hardware structures and/or software modules for performing the functions are included. A person skilled in the art should be easily aware that, in combination with the units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the machine learning model management apparatus (for example, the machine learning model management center or the federated learning server) may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It is to be noted that, in embodiments of this application, module division is an example, and is merely a logical function division. During actual implementation, another division manner may be used.

In some embodiments, the disclosed methods may be implemented as computer program instructions encoded in a machine-readable format on a computer-readable storage medium or encoded on another non-transitory medium or product.

It is to be understood that the arrangement described herein is merely used as an example. Thus, a person skilled in the art appreciates that another arrangement and another element (for example, a machine, an interface, a function, a sequence, and an array of functions) can be used to replace the arrangement, and some elements may be omitted together depending on a desired result.

In addition, many of the described elements are functional entities that can be implemented as discrete or distributed components, or implemented in any suitable combination at any suitable position in combination with another component.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer-executable instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A machine learning model update method, comprising:

   generating, by a first apparatus, a first intermediate result based on a first data subset and a first model;
   receiving, by the first apparatus, an encrypted second intermediate result sent by a second apparatus, wherein the second intermediate result is generated based on a second data subset and a second model that correspond to the second apparatus; and
   obtaining, by the first apparatus, a first gradient of the first model, wherein the first gradient is generated based on the first intermediate result and the encrypted second intermediate result, wherein
   after being decrypted by using a second private key, the first gradient is for updating the first model, and the second private key is a decryption key generated by the second apparatus for homomorphic encryption.

2. The method according to claim 1, wherein the second intermediate result is encrypted by using a second public key generated by the second apparatus for homomorphic encryption, and the method further comprises:

   generating, by the first apparatus, a first public key and a first private key for homomorphic encryption; and

encrypting, by the first apparatus, the first intermediate result by using the first public key.

3. The method according to claim 2, wherein the first apparatus sends the encrypted first intermediate result to the second apparatus.

4. The method according to claim 2, wherein that the first gradient of the first model is determined based on the first intermediate result and the encrypted second intermediate result is specifically as follows: the first gradient of the first model is determined based on the encrypted first intermediate result and the encrypted second intermediate result, and the method further comprises:
decrypting, by the first apparatus, the first gradient of the first model by using the first private key.

5. The method according to any one of claims 1 to 4, wherein the method further comprises:

generating, by the first apparatus, first noise of the first gradient of the first model;
sending, by the first apparatus, the first gradient comprising the first noise to the second apparatus; and
receiving, by the first apparatus, the first gradient decrypted by using the second private key, wherein the decrypted gradient comprises the first noise.

6. The method according to any one of claims 1 to 5, wherein the method further comprises:

receiving, by the first apparatus, a second parameter that is of the second model and that is sent by the second apparatus;
determining, by the first apparatus, a second gradient of the second model based on the encrypted first intermediate result, the encrypted second intermediate result, and a second parameter set of the second model; and
sending, by the first apparatus, the second gradient of the second model to the second apparatus.

7. The method according to claim 6, wherein the method further comprises:

determining, by the first apparatus, second noise of the second gradient, wherein
the second gradient sent to the second apparatus comprises the second noise.

8. The method according to claim 6 or 7, wherein the method further comprises:

receiving, by the first apparatus, an updated second parameter comprising the second noise, wherein the second parameter set is a parameter set for updating the second model by using the second gradient; and
removing, by the first apparatus, the second noise comprised in the updated second parameter.

9. The method according to any one of claims 1 to 8, wherein

the first apparatus receives at least two second public keys for homomorphic encryption, wherein the at least two second public keys are generated by at least two second apparatuses; and
the first apparatus generates, based on the received at least two second public keys and the first public key, an aggregated public key for homomorphic encryption, wherein the aggregated public key is for encrypting the second intermediate result and/or the first intermediate result.

10. The method according to claim 9, wherein that the first gradient of the first model is decrypted by using the second private key comprises:
sequentially sending, by the first apparatus, the first gradient of the first model to the at least two second apparatuses, and receiving first gradients of the first model that are obtained through decryption performed by the at least two second apparatuses respectively by using corresponding second private keys.

11. The method according to claim 9 or 10, wherein the method further comprises: decrypting, by the first apparatus, the first gradient of the first model by using the first private key.

12. A machine learning model update method, comprising:

sending, by a first apparatus, an encrypted first data subset and an encrypted first parameter of a first model, wherein the encrypted first data subset and the encrypted first parameter are for determining an encrypted first intermediate result;

receiving, by the first apparatus, an encrypted first gradient of the first model, wherein the first gradient of the first model is determined based on the encrypted first intermediate result, the encrypted first parameter, and an encrypted second intermediate result; and

decrypting, by the first apparatus, the encrypted first gradient by using a first private key, wherein the decrypted first gradient of the first model is for updating the first model.

13. The method according to claim 12, wherein the method further comprises:

receiving, by the first apparatus, an encrypted second gradient of a second model, wherein the encrypted second gradient is determined based on the encrypted first intermediate result and the encrypted second intermediate result, the second intermediate result is determined based on a second data subset of a second apparatus and a parameter of the second model of the second apparatus, and the encrypted second intermediate result is obtained by the second apparatus by performing homomorphic encryption on the second intermediate result;

decrypting, by the first apparatus, the second gradient by using the first private key; and

sending, by the first apparatus to the second apparatus, the second gradient decrypted by using the first private key, wherein the decrypted second gradient is for updating the second model.

14. The method according to claim 12 or 13, wherein the first gradient received by the first apparatus comprises first noise, the decrypted first gradient comprises the first noise, and a parameter of the updated first model comprises the first noise.

15. The method according to any one of claims 12 to 14, wherein the method further comprises:

updating, by the first apparatus, the first model based on the decrypted first gradient; or

sending, by the first apparatus, the decrypted first gradient.

16. The method according to any one of claims 12 to 15, wherein the method further comprises:

receiving, by the first apparatus, at least two second public keys for homomorphic encryption, wherein the at least two second public keys are generated by at least two second apparatuses; and

generating, by the first apparatus based on the received at least two second public keys and the first public key, an aggregated public key for homomorphic encryption, wherein the aggregated public key is for encrypting the second intermediate result and/or the first intermediate result.

17. A machine learning model update method, comprising:

receiving an encrypted first intermediate result and an encrypted second intermediate result, wherein the encrypted first intermediate result is generated based on an encrypted first data subset and a first model of a first apparatus, and the encrypted second intermediate result is generated based on an encrypted second data subset and a second model of a second apparatus;

receiving a parameter of the first model;

determining a first gradient of the first model based on the encrypted first intermediate result, the encrypted second intermediate result, and the parameter of the first model;

decrypting the first gradient; and

updating the first model based on the decrypted first gradient.

18. The method according to claim 17, wherein the encrypted first intermediate result is obtained by performing homomorphic encryption on the first intermediate result by using a first public key; and the encrypted second intermediate result is obtained by performing homomorphic encryption on a second intermediate result by using the first public key.

19. The method according to claim 18 or 17, wherein the decrypting the first gradient comprises:
decrypting the first gradient by using a first private key.

20. The method according to claim 19, wherein the method further comprises:
sending the first gradient to the first apparatus.

21. The method according to claim 20, wherein the method further comprises: obtaining the first public key from the first apparatus, and sending the first public key to the second apparatus.

22. A machine learning model update apparatus, comprising a receiving module and a processing module, wherein

the processing module is configured to generate a first intermediate result based on a first data subset and a first model;

the receiving module is configured to receive an encrypted second intermediate result sent by a second apparatus, wherein the second intermediate result is generated based on a second data subset and a second model that correspond to the second apparatus; and

the processing module is further configured to: obtain a first gradient of the first model, wherein the first gradient is generated based on the first intermediate result and the encrypted second intermediate result, wherein after being decrypted by using a second private key, the first gradient of the first model is for updating the first model, and the second private key is a decryption key generated by the second apparatus for homomorphic encryption.

23. The apparatus according to claim 22, wherein the second intermediate result is encrypted by using a second public key generated by the second apparatus for homomorphic encryption; and

the processing module is further configured to generate a first public key and a first private key for homomorphic encryption, and encrypt the first intermediate result by using the first public key.

24. The apparatus according to claim 23, wherein the apparatus further comprises a sending module, configured to send the encrypted first intermediate result.

25. The apparatus according to any one of claims 22 to 24, wherein

the processing module is further configured to generate first noise of the first gradient of the first model;

the sending module is further configured to send the first gradient comprising the first noise to the second apparatus; and

the receiving module is further configured to receive a first gradient decrypted by using the second private key, wherein the decrypted gradient comprises the first noise.

26. A machine learning model update apparatus, comprising a receiving module, a processing module, and a sending module, wherein

the sending module is configured to send an encrypted first data subset and an encrypted first parameter of a first model, wherein the encrypted first data subset and the encrypted first parameter are for determining an encrypted first intermediate result;

the receiving module is configured to receive an encrypted first gradient of the first model, wherein the first gradient of the first model is determined based on the encrypted first intermediate result, the encrypted first parameter, and an encrypted second intermediate result; and

the processing module is configured to decrypt the encrypted first gradient by using a first private key, wherein the decrypted first gradient of the first model is for updating the first model.

27. The apparatus according to claim 26, wherein

the receiving module is further configured to receive an encrypted second gradient of a second model, wherein the encrypted second gradient is determined based on the encrypted first intermediate result and the encrypted second intermediate result, the second intermediate result is determined based on a second data subset of a second apparatus and a parameter of the second model of the second apparatus, and the encrypted second intermediate result is obtained by the second apparatus by performing homomorphic encryption on the second intermediate result;

the processing module is further configured to decrypt the second gradient by using the first private key; and

the sending module is further configured to send the second gradient decrypted by using the first private key, wherein the decrypted second gradient is for updating the second model.

28. The apparatus according to claim 26 or 27, wherein the first gradient received by the receiving module comprises first noise, the decrypted first gradient comprises the first noise, and the updated parameter of the first model comprises the first noise.

**29.** The apparatus according to any one of claims 26 to 28, wherein
the processing module is further configured to update the first model based on the decrypted first gradient.

**30.** The apparatus according to any one of claims 26 to 29, wherein

the receiving module is further configured to receive at least two second public keys for homomorphic encryption, wherein the at least two second public keys are generated by at least two second apparatuses; and
the processing module is further configured to generate, based on the received at least two second public keys and the first public key, an aggregated public key for homomorphic encryption, wherein the aggregated public key is for encrypting the second intermediate result and/or the first intermediate result.

**31.** A machine learning model update apparatus, comprising a receiving module and a processing module, wherein

the receiving module is configured to: receive an encrypted first intermediate result and an encrypted second intermediate result, and receive a parameter of a first model, wherein the encrypted first intermediate result is generated based on an encrypted first data subset and a first model of a first apparatus, and the encrypted second intermediate result is generated based on an encrypted second data subset and a second model of a second apparatus; and
the processing module is configured to: determine a first gradient of the first model based on the encrypted first intermediate result, the encrypted second intermediate result, and the parameter of the first model, decrypt the first gradient, and update the first model based on the decrypted first gradient.

**32.** The apparatus according to claim 31, wherein the encrypted first intermediate result is obtained by performing homomorphic encryption on the first intermediate result by using a first public key; and the encrypted second intermediate result is obtained by performing homomorphic encryption on a second intermediate result by using the first public key.

**33.** A communication apparatus, comprising:

a memory, storing executable program instructions; and
a processor, wherein the processor may be coupled to the memory, and read and execute the instructions in the memory, to enable the communication apparatus to implement the method according to any one of claims 1 to 22.

**34.** The apparatus according to claim 33, wherein the apparatus is a terminal, a chip in a terminal, or a network device.

**35.** A computer-readable storage medium, comprising instructions, wherein when the instructions are run on a computer, the computer is enabled to perform the method according to any one of claims 1 to 21.

**36.** A computer program product comprising instructions, wherein when the computer program product is run on a computer, the computer is enabled to perform the method according to any one of claims 1 to 21.

FIG. 1

FIG. 2A

FIG. 2B

Generate a first intermediate
result based on a first data
subset ~ *302*

Receive an encrypted second
intermediate result sent by a
second apparatus ~ *304*

Obtain a first gradient of a first
model ~ *306*

Update the first model ~ *308*

FIG. 3

| Apparatus A | Apparatus B |
|---|---|
| 400: Perform homomorphic encryption on a public key A and a private key A | 400': Perform homomorphic encryption on a public key B and a private key B |

401: Public key A →

← 401': Public key B

| 402: Group a data subset A of the apparatus A, to obtain a grouped data subset A | 402': Group a data subset B of the apparatus B, to obtain a grouped data subset B |
|---|---|
| 403-404: Determine an intermediate result A of the data subset A, and group the intermediate result A | 403'-404': Determine an intermediate result B of the data subset B, and group the intermediate result B |

405: Encrypted intermediate result A →

← 405': Encrypted intermediate result B

| 406: Merge the intermediate result A and the encrypted intermediate result B | 406': Merge the intermediate result B and the encrypted intermediate result A |
|---|---|
| 407: Determine a gradient A of an encrypted model A | 407': Determine a gradient B of an encrypted model B |
| 408: Determine noise A of the gradient A | 408': Determine noise B of the gradient B |

409. Encrypted gradient A that includes the noise A →

← 409': Encrypted gradient B that includes the noise B

| 410: Decrypt the gradient B that includes the noise B by using the private key A | 410': Decrypt the gradient A that includes the noise A by using the private key B |
|---|---|
| 411: Determine a second gradient set including second noise before grouping | 411': Determine a first gradient set including first noise before grouping |

412: Gradient B including the noise B before grouping →

← 412': Gradient A including the noise A before grouping

| 413: Determine a gradient A from which the noise A is removed | 413': Determine a gradient B from which the noise B is removed |
|---|---|
| 414: Update the model A | 414'. Update the model B |

FIG. 4

| Apparatus A | Apparatus B |
|---|---|

**500:** Public key A and private key B on which homomorphic encryption is performed

**501:** Public key A →

**502-503:** Group a data subset A, and encrypt a grouped data subset A

**502':** Group a data subset B, to obtain a grouped data subset B

**504-505:** Form a parameter group A corresponding to each parameter A, and encrypt the parameter group A to form an encrypted parameter group A

**503':** Group labels, to obtain grouped labels

**504':** Obtain an intermediate result B based on a model B and the grouped data subset B

**506:** Encrypted parameter group A and data subset B →

**507:** Obtain an intermediate result A based on the encrypted parameter group A and the data subset A

**508:** Merge the intermediate result B and the encrypted intermediate result A

**509:** Determine a gradient A of a model A and noise A of the gradient A

**511:** Determine a gradient B of the model B and noise B of the gradient B

**512:** Obtain an encrypted gradient A that includes the noise A

**513:** Obtain an encrypted gradient B that includes the noise B

← **514:** Encrypted gradient B that includes the noise B and encrypted gradient A that includes the noise A

Continue to FIG. 5B

FIG. 5A

```
        Apparatus A                                    Apparatus B

  ┌─────────────────────────────┐           ┌─────────────────────────────┐
  │    Continued from FIG. 5A    │           │                             │
  └─────────────────────────────┘

  ┌─────────────────────────────┐
  │ 515-516: Decrypt the gradient A including
  │ the noise A, and obtain a gradient A
  │ including the noise A before grouping
  │ based on a decrypted gradient A
  └─────────────────────────────┘

  ┌─────────────────────────────┐
  │ 517: Update the model A by using the
  │ gradient A including the noise A before
  │ grouping
  └─────────────────────────────┘

  ┌─────────────────────────────┐
  │ 518-519: Obtain an updated parameter A
  │ including the noise A, and encrypt the
  │ updated parameter A including the noise A
  └─────────────────────────────┘

  ┌─────────────────────────────┐
  │ 520-521: Decrypt the gradient B including
  │ the noise B, and obtain a gradient B
  │ including the noise B before grouping based
  │ on a decrypted gradient B
  └─────────────────────────────┘
```

522: Encrypted and updated parameter A including the noise A and decrypted the gradient B including the noise B  →

523: Remove the noise A, to obtain an updated parameter A

← 524: Encrypted and updated parameter A

525: Decrypt the updated parameter A

526: Remove the noise B, to obtain a gradient B

527: Update the model B by using the gradient B

FIG. 5B

| Apparatus A | Apparatus B | Apparatus C |
|---|---|---|

**601: Perform homomorphic encryption on a public key A and a private key A**

**602: Group a data subset A, to obtain a grouped data subset A**

**601': Group a data subset B, to obtain a grouped data subset B**

**603: Encrypt the grouped data subset A**

**602': Group labels, to obtain grouped labels**

**604: Public key A and encrypted data subset A**

**605: Form a parameter group A corresponding to each parameter A, and encrypt the parameter group A to form an encrypted parameter A**

**606: Encrypted parameter group A**

**607: Obtain an encrypted intermediate result A based on the encrypted parameter group A and the data subset A**

**608: Encrypted intermediate result A**

**609: Determine an intermediate result B based on a model B and the grouped data subset B**

**610: Merge the intermediate result B and the encrypted intermediate result A**

**611: Determine a gradient B of the model B and noise B of the gradient B, obtain, based on the gradient B and the noise B, a gradient B including the noise B, and encrypt the gradient B**

**Continue to FIG. 6B**

FIG. 6A

FIG. 6B

701: Each apparatus generates a public key and a public key for homomorphic encryption, and send the generated public key to another apparatus

702: Each apparatus determine an intermediate result for each data subset by using a respective data subset and model

703: Each apparatus encrypts the intermediate result by using a public key, and sends an encrypted intermediate result to another apparatus

704: Each apparatus merges the encrypted intermediate result generated by the apparatus and an encrypted intermediate result received from another apparatus

705: Each apparatus calculates a gradient of a respective model based on a merged intermediate result

706: Each apparatus sends a gradient sequence of the respective model to another apparatus, receives a result of decrypting a gradient by another apparatus, and updates the respective model by using a decrypted gradient

FIG. 7

Apparatus ~ 800

Receiving module ~ 801

Processing module ~ 802

Sending module ~ 803

FIG. 8

Processor ~901

Communication interface ~904

903

Memory ~902

FIG. 9

| INTERNATIONAL SEARCH REPORT | International application No. |
|---|---|
| | **PCT/CN2021/112644** |

**A. CLASSIFICATION OF SUBJECT MATTER**

G06N 20/00(2019.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, EPODOC, WPI, CNKI, IEEE: 学习, 模型, 中间结果, 梯度, 加密, 解密, 更新, 训练, 公钥, 私钥, learning, model, gradient, encryption, decrytion, update, train, key, public, private

**C. DOCUMENTS CONSIDERED TO BE RELEVANT**

| Category* | Citation of document, with indication, where appropriate, of the relevant passages | Relevant to claim No. |
|---|---|---|
| X | CN 111340247 A (SHENZHEN QIANHAI WEBANK CO., LTD.) 26 June 2020 (2020-06-26) claims 1-10, description paragraphs [0040]-[0107] | 17-21, 31-36 |
| A | CN 109886417 A (SHENZHEN QIANHAI WEBANK CO., LTD.) 14 June 2019 (2019-06-14) entire document | 1-36 |
| A | CN 111178538 A (HANGZHOU RUIXIN DATA TECHNOLOGY CO., LTD.) 19 May 2020 (2020-05-19) entire document | 1-36 |
| A | CN 110190946 A (ZHEJIANG LAB) 30 August 2019 (2019-08-30) entire document | 1-36 |
| A | US 2018359084 A1 (MICROSOFT TECHNOLOGY LICENSING, L.L.C.) 13 December 2018 (2018-12-13) entire document | 1-36 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 November 2021** | **11 November 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT | | International application No. |
|---|---|---|
| Information on patent family members | | PCT/CN2021/112644 |

| Patent document cited in search report | | | Publication date (day/month/year) | Patent family member(s) | | | Publication date (day/month/year) |
|---|---|---|---|---|---|---|---|
| CN | 111340247 | A | 26 June 2020 | WO | 2021159798 | A1 | 19 August 2021 |
| CN | 109886417 | A | 14 June 2019 | WO | 2020177392 | A1 | 10 September 2020 |
| CN | 111178538 | A | 19 May 2020 | None | | | |
| CN | 110190946 | A | 30 August 2019 | WO | 2020233260 | A1 | 26 November 2020 |
| US | 2018359084 | A1 | 13 December 2018 | EP | 3639127 | A1 | 22 April 2020 |
| | | | | WO | 2018231446 | A1 | 20 December 2018 |

Form PCT/ISA/210 (patent family annex) (January 2015)

**REFERENCES CITED IN THE DESCRIPTION**

**Patent documents cited in the description**

- CN 202011635759